(19) Europäisches Patentamt
European Patent Office
Office européen des brevets

(11) **EP 4 439 488 A1**

(12) **EUROPEAN PATENT APPLICATION**

(43) Date of publication:
**02.10.2024 Bulletin 2024/40**

(21) Application number: **24165655.2**

(22) Date of filing: **22.03.2024**

(51) International Patent Classification (IPC):
**G06V 20/56** (2022.01)   **G06V 10/774** (2022.01)
**G06V 10/82** (2022.01)

(52) Cooperative Patent Classification (CPC):
**G06V 20/588; G06V 10/774; G06V 10/82;
G06V 20/56;** G06V 2201/08

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.03.2023   US 202363456179 P
12.04.2023   US 202318133835
12.04.2023   US 202318133752
12.04.2023   US 202318133797
12.04.2023   US 202318133714
12.07.2023   US 202363526233 P
20.07.2023   US 202318224360
20.07.2023   US 202318224208
12.09.2023   US 202363537875 P
05.12.2023   US 202363606307 P**

(71) Applicant: **GEOTAB Inc.
Oakville, ON L6H 7V2 (CA)**

(72) Inventors:
- **Mazumder, Joy
  Etobicoke (CA)**
- **Saurav, Shashank
  Toronto (CA)**
- **Siddique, Javed
  York (CA)**
- **Siddique, Mohammed Sohail
  Milton (CA)**
- **Qiao, Donghao
  Milton (CA)**
- **Ivascu, Cristian Florin
  Hamilton (CA)**

(74) Representative: **Fleuchaus & Gallo Partnerschaft
mbB
Steinerstraße 15/A
81369 München (DE)**

(54) **SYSTEMS AND METHODS FOR DETECTING VEHICLE FOLLOWING DISTANCE**

(57)    Systems, methods, and models are discussed, for determining vehicle positioning, and in particular identifying tailgating. Models are designed to determine following distance between two vehicles. Following distance models are used in detection of tailgating, based on determined distance between two vehicles. Results of tailgating are output to warn a driver, or to provide a report on driver behavior.

FIGURE 1A

**Description**

TECHNICAL FIELD

The present disclosure generally relates to systems and methods for determining vehicle positioning, and in particular relate to determining vehicle following distance.

BACKGROUND

Monitoring vehicle movement and positioning is advantageous for fleet managers for a variety of reasons, including improving the safety of their fleet. Via real time monitoring, inappropriate behavior or dangerous situations can be identified, and a driver can be immediately alerted of the dangerous situation. Reports can be prepared indicating or summarizing dangerous situations. Such alerts or reports may reduce occurrence of traffic accidents. Further, monitoring vehicle movement and positioning is also useful in self-driving (autonomous) vehicles.

SUMMARY

According to a broad aspect, the present disclosure describes a method for determining a following distance between a first vehicle and a second vehicle, the method comprising: accessing an image including a representation of the first vehicle from a perspective of the second vehicle behind the first vehicle, the image further representing a common lane of travel of the first vehicle and the second vehicle; determining, by at least one processor, a first vertical position in the image representing a bottom of the first vehicle; accessing, by the at least one processor, a second vertical position in the image representing a static physical distance from the second vehicle; determining a transformed first vertical position by applying, by the at least one processor, an image transformation matrix to the first vertical position; determining a transformed second vertical position by applying, by the at least one processor, the image transformation matrix to the second vertical position; determining an image distance between the transformed first vertical position and the transformed second vertical position; determining the following distance as a physical distance between the first vehicle and the second vehicle based on the determined image distance and the static physical distance; and outputting the determined following distance.

The first vertical position may represent a bottom boundary of a bounding box which encompasses the first vehicle. The second vertical position may represent a distal end of a hood of the second vehicle as represented in the image.

The image transformation matrix may represent a transformation of the image to a transformed image having a fixed relationship between pixel size in the transformed image and physical distance represented by the transformed image.

The method may further comprise: determining a first boundary of the common lane of travel; determining a second boundary of the common lane of travel; determining a vanishing point for the image as a point where the first boundary and the second boundary intersect; accessing a region of interest in the image, where a bottom edge and a top edge of the region of interest are parallel to a horizontal axis of the image, a left edge of the region of interest extends from first point left of the common lane of travel towards the vanishing point, and a right edge of the region of interest extends from a second point right of the common lane of travel towards the vanishing point; determining a transformed region of interest where a left edge of the transformed region of interest is parallel to a right edge of the transformed region of interest; and determining the image transformation matrix as a matrix which when applied to the region of interest, transforms the region of interest to the determined transformed region of interest. The first point may be at a left boundary of the image and the second point may be at a right boundary of the image. The bottom edge of the region of interest may be positioned above a hood of the second vehicle as represented in the image, and the top edge of the region of interest may be positioned below the vanishing point. Accessing the region of interest in the image may comprise receiving an indication of the region of interest as user input via a user input device. Accessing the region of interest in the image may comprise generating, by the at least one processor, boundaries of the region of interest. Determining the transformed region of interest may comprise determining four corner points of a rectangle corresponding to the transformed region of interest. The method may further comprise: determining a ratio of image distance to physical distance for a vertical axis of the image as transformed according to the image transformation matrix, based on a received measurement for a physical distance coaxial to the common lane and an image distance coaxial to the common lane as represented in the transformed region of interest. The method may further comprise: determining a ratio of image distance to physical distance for a horizontal axis of the image as transformed according to the image transformation matrix, based on a received measurement for a physical width of the common lane and an image distance width of the common lane as represented in the transformed region of interest. The method may further comprise: determining a ratio of image distance to physical distance for a vertical axis of the image as transformed according to the image transformation matrix, based on the ratio of image distance to physical distance for the horizontal axis of the image and based on the image transformation matrix.

The static physical distance may be received as a physical measurement between a front of the second vehicle and content represented in the image at the second vertical position.

The method may further comprise: determining, by the at least one processor, whether the following distance is within a tailgating distance criteria; identifying, by the at least one processor, that the second vehicle is not tailgating the first vehicle if the following distance is outside of the tailgating distance criteria; and identifying, by the at least one processor, that the second vehicle is tailgating the first vehicle if tailgating criteria are met, wherein the tailgating criteria includes the following distance being within the tailgating distance criteria. The method may further comprise, in response to an identification that the second vehicle is tailgating the first vehicle, outputting a tailgating indication to a driver of the second vehicle. The method may further comprise, in response to an identification that the second vehicle is tailgating the first vehicle, outputting a tailgating indication to a management server.

Accessing the image may comprise capturing the image by at least one image capture device of the system.

Accessing the image may comprise receiving, by at least one communication interface of the system communicatively coupled to the at least one processor, the image.

Accessing the image may comprise accessing the image as stored in at least one non-transitory processor-readable storage medium of the system.

According to another broad aspect, the present disclosure describes a system for determining a following distance between a first vehicle and a second vehicle, the system comprising: at least one processor; and at least one non-transitory processor-readable storage medium communicatively coupled to the at least one processor and storing processor-executable instructions which when executed by the at least one processor cause the system to: access an image including a representation of the first vehicle from a perspective of the second vehicle behind the first vehicle, the image further representing a common lane of travel of the first vehicle and the second vehicle; determine, by the at least one processor, a first vertical position in the image representing a bottom of the first vehicle; access, by the at least one processor, a second vertical position in the image representing a static physical distance from the second vehicle; determine a transformed first vertical position by applying, by the at least one processor, an image transformation matrix to the first vertical position; determine a transformed second vertical position by applying, by the at least one processor, the image transformation matrix to the second vertical position; determine an image distance between the transformed first vertical position and the transformed second vertical position; determine the following distance as a physical distance between the first vehicle and the second vehicle based on the determined image distance and the static physical distance; and output the determined following distance.

The processor-executable instructions may further cause the system to perform other acts as discussed above regarding the method for determining a following distance between a first vehicle and a second vehicle.

BRIEF DESCRIPTION OF THE DRAWINGS

Exemplary non-limiting embodiments are described with reference to the accompanying drawings in which:

Figure 1A illustrates a block diagram of an exemplary mobile image system.

Figure 1B illustrates a block diagram of another exemplary mobile image system.

Figure 2A is a simplified block diagram of an image capture device according to at least one exemplary implementation.

Figure 2B is a simplified block diagram of an image capture device according to at least one other exemplary implementation.

Figure 3 is a schematic view of an operator device in accordance with at least one exemplary implementation.

Figure 4 is a flowchart diagram which illustrates a method for identifying and reporting a tailgating situation in accordance with at least one exemplary implementation.

Figure 5 is a flowchart diagram which illustrates a method for detecting tailgating, in accordance with at least one exemplary implementation.

Figure 6 is a side view of a vehicle being followed by another vehicle, in accordance with at least one exemplary implementation.

Figures 7A, 7B, and 7C illustrate exemplary images for cameras, showing a lead vehicle in different horizontal positions.

Figures 8A and 8B illustrate exemplary images for cameras highlighting horizonal position of a lead vehicle.

Figure 9 illustrates an alert via a user interface, in accordance with at least one exemplary implementation.

Figure 10 is a flowchart diagram which illustrates a method for determining following distance, in accordance with at least one exemplary implementation.

Figure 11 illustrates an exemplary image based on which following distance can be determined, in accordance with at least one exemplary implementation.

Figure 12 is a side view of an exemplary scenario for calibrating an image capture device.

Figure 13 illustrates an exemplary image as transformed in accordance with an image transformation matrix.

Figure 14 is a flowchart diagram which illustrates a method for determining an image transformation matrix, in accordance with at least one exemplary implementation.

Figure 15 illustrates an exemplary image with a region of interest labelled, in accordance with at least one exemplary implementation.

Figure 16 illustrates an exemplary transformed region of interest as transformed in accordance with an image transformation matrix.

Figure 17 is a side view of an exemplary scenario for calibrating an image capture device.

Figure 18 illustrates another exemplary transformed region of interest as transformed in accordance with an image transformation matrix.

Figure 19 is a top view of an exemplary scenario for calibrating an image capture device.

Figure 20 illustrates another exemplary transformed region of interest as transformed in accordance with an image transformation matrix.

Figure 21 is a side view of an exemplary scenario illustrating projection of images.

Figures 22 and 23 illustrate exemplary images for determining whether a vehicle is within a lane of travel, in accordance with at least two exemplary implementations.

## DETAILED DESCRIPTION

The present disclosure details systems and methods for creating training data, for training machine learning models, and for applying machine learning models, for identifying vehicle movement and positioning. The present disclosure sees particular value in detecting travel lane of vehicles, determining distance between vehicles, and identifying when a vehicle is tailgating another vehicle.

Throughout this disclosure, a "following" situation refers to a situation where a "following vehicle" is travelling behind a "lead vehicle", in the same direction as the lead vehicle. In this context, "following" does not necessarily mean that the following vehicle is actively pursuing the lead vehicle (e.g. to the destination of the lead vehicle), but rather that the following vehicle is travelling behind the lead vehicle, for at least a moment in time. Lead vehicles and following vehicles are commonly referred to as first and second vehicles throughout this disclosure.

"Tailgating" generally refers to a situation involving two vehicles travelling in the same direction, where one vehicle is following the other vehicle at an unsafe distance (e.g. too close for the following vehicle to reliably safely stop if needed). In particular, if a following vehicle is tailgating a lead vehicle, sudden braking of the lead vehicle may result in an accident where the following vehicle hits the lead vehicle from behind. For instance, delayed reaction time of the driver of the following vehicle may prevent the following vehicle from decelerating at a sufficient rate so as to avoid rear-ending the lead vehicle. However, if the driver of the following vehicle was alerted of this dangerous circumstance, an accident may be avoided, by causing the driver of the following vehicle to alter operation of the following vehicle to increase the following distance from the lead vehicle.

Models (e.g. artificial intelligence, machine learning, or rules-based models) for identifying vehicle positioning and movement, based on data captured by one or more image capture devices (e.g. video cameras or smart video cameras) are disclosed herein. Generally, a model is created and/or trained, after which the model becomes able to analyze input data and reliably detect features or make determinations based on the input data. In some implementations, a model is deployed to an image capture device or a proximate device communicatively coupled to the image capture device, and captured image data is analyzed by the model. Such implementations are optimal for alerting the driver to dangerous situations, as analysis can be performed quickly without the need for communication with a remote server. In alternative implementations, captured image data is analyzed in accordance with the model remote from the image capture device (e.g. at a central server or processing station). Such implementations are useful for identifying dangerous situations after-the-fact, such as for driver evaluation or collision reconstruction. However, such implementations could also be used to alert the driver to dangerous situations as they happen, albeit after communication of image data to the central server, followed by a message from the server to a device at the vehicle to output an alert to the driver. In yet other implementations, captured image data can be analyzed at an image capture device or a proximate device communicatively coupled to the image capture device, and results can be sent to a remote device (e.g. a central server or processing station), such as for driver evaluation or collision reconstruction. In yet other implementations, captured image data can be analyzed at an image capture device or a proximate device communicatively coupled to the image capture device, for immediate driver feedback, and captured image data can be analyzed at a remote device such as for driver evaluation or collision reconstruction.

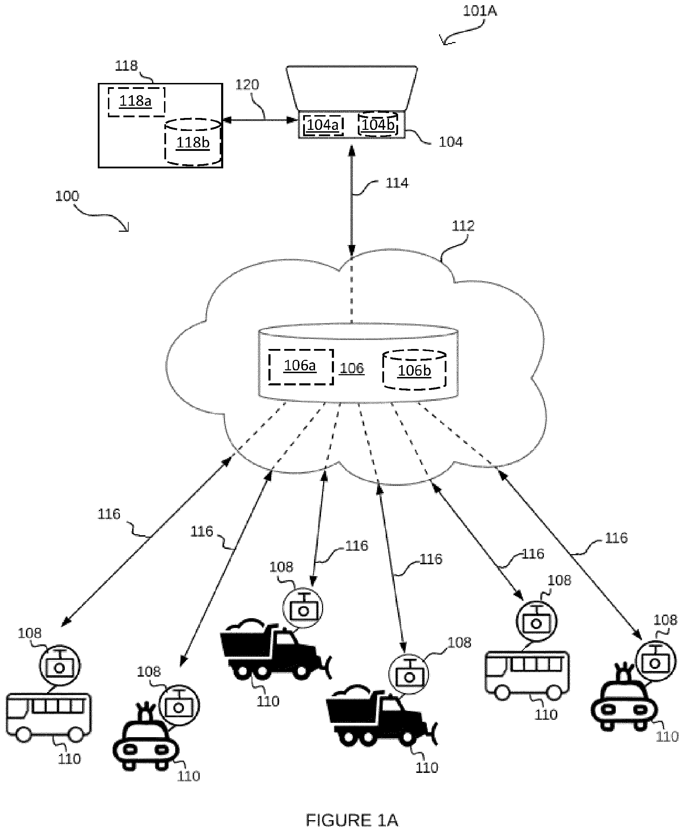

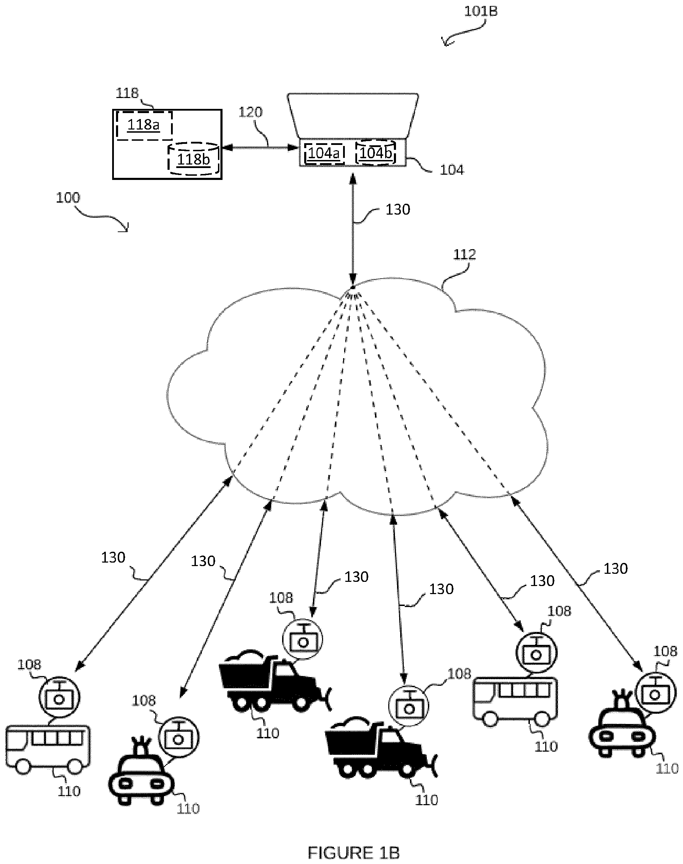

Figure 1A and Figure 1B illustrate block diagrams of exemplary mobile image systems 101A and 101B, respectively, and exemplary communication network 100 through which mobile image systems 101A and 101B operate.

In many of the implementations discussed herein, communication network 100 is optional. That is, in some implementations identification of vehicle positioning and movement can be performed entirely at a device local to a vehicle. Models executed at the device local to the vehicle can be distributed physically (e.g. by connecting the device to another device to transfer the model, or by using a portable storage medium to transfer the model), thus obviating the need for communication network 100. Alternatively, communication network 100 can be used to distribute models to vehicle devices (e.g. by sending models to vehicle devices for download).

Communication network 100 may include one or more computing systems and may be any suitable combination of networks or portions thereof to facilitate communication between network components. Some examples of networks include, Wide Area Networks (WANs), Local Area Networks (LANs), Wireless Wide Area Networks (WWANs), data networks, cellular networks, voice networks, among other networks, which may be wired and/or wireless. Communication network 100 may operate according to one or more communication protocols, such as, General Packet Radio Service (GPRS), Universal Mobile Telecommunications Service (UMTS), GSM®, Enhanced Data Rates for GSM Evolution (EDGE), LTE™, CDMA, LPWAN, Wi-Fi®, Bluetooth®, Ethernet, HTTP/S, TCP, and CoAP/DTLS, or other suitable protocol. Communication network 100 may take other forms as well.

Mobile image system 101A includes a plurality of image capture devices 108, which can comprise (and be referred to herein) as smart video cameras (SVCs), though are not strictly limited as such. The plurality of image capture devices 108 are positioned at (e.g. mounted in/on, or placed within or on) a plurality of vehicles 110. Image capture system 101A also includes cloud server 106, client device 104 and local server 118. Client device 104 is communicatively coupled to local server 118 via communication link 120. Client device 104 is also shown as including at least one processor 104a and at least one non-transitory processor-readable storage medium 104b. The at least one processor 104a can perform acts such as determinations, identification, data analysis, processing, and other appropriate acts, such as acts in the methods described herein. The at least one non-transitory processor-readable storage medium 104b can store any appropriate data, including processor-executable instructions which when executed by the at least one processor 104a cause the client device 104 to perform acts, such as acts of the methods described herein. An exemplary client device may include a personal computer, server, a system, a combination of subsystems, and devices. Specific and non-limiting examples of an image capture device or smart video camera include a Netradyne® video camera and a Nauto® video camera. Reference to a "camera" in this disclosure can include a smart video camera, but may also include a more basic camera. In this regard, the term "camera" can be used interchangeably with "image capture device". Each image capture device 108 is communicatively coupled to cloud server 106 in cloud 112 via a respective communication link 116. For example, each image capture device 108 and the cloud server 106 are configured to wirelessly communicate to each other. Cloud server 106 is also shown as including at least one processor 106a and at least one non-transitory processor-readable storage medium 106b. The at least one processor 106a can perform acts such as determinations, identification, data analysis, processing, and other appropriate acts, such as acts in the methods described herein. The at least one non-transitory processor-readable storage medium 106b can store any appropriate data, including processor-executable instructions which when executed by the at least one processor 106a cause the cloud server 106 to perform acts, such as acts of the methods described herein. Cloud server 106 is communicatively coupled to client device 104 via communication link 114. For example, each cloud server 106 and client device 104 are configured to wirelessly communicate to each other. As another example, cloud server 106 and client device 104 are configured to communicate with each over a wired connection. In some implementations, local server 118 may be a remote server from client device 104. Local server 118 is also shown as including at least one processor 118a and at least one non-transitory processor-readable storage medium 118b. The at least one processor 118a can perform acts such as determinations, identification, data analysis, processing, and other appropriate acts, such as acts in the methods described herein. The at least one non-transitory processor-readable storage medium 118b can store any appropriate data, including processor-executable instructions which when executed by the at least one processor 118a cause the local server 118 to perform acts, such as acts of the methods described herein.

Mobile image system 101B in Figure 1B includes a plurality of image capture devices 108, positioned at a plurality of vehicles 110, similar to in Figure 1A. Image system 101B also includes client device 104 and local server 118, similar to in Figure 1A. In the example of Figure 1B, client device 104 is communicatively coupled to local server 118 via communication link 120. An exemplary client device may include a personal computer, server, a system, a combination of systems subsystems, and devices. Specific and non-limiting examples of an image capture device include a Netradyne® video camera and a Nauto® video camera. Each image capture device 108 is communicaticvely coupled to client device 104 via a respective communication link 130. For example, each image capture device 108 is configured to wirelessly communicate with client device 104. In some implementations, local server 118 may be a remote server from client device 104. The description of components in mobile image system 101A in Figure 1A is applicable to similarly labelled components in mobile surveillance system 101B in Figure 1B.

Specific and non-limiting examples of vehicle types which each of vehicles 110 can be include: a government owned and operated vehicle, (e.g., as a vehicle for snow clearing, infrastructure maintenance, police enforcement), a public transportation vehicle, (e.g., bus, train), and a privately owned vehicle, (e.g., taxi, courier vehicle), among others.

An image capture device 108 may be mounted to or positioned at a vehicle 110 in a manner such that image capture device 108 captures image data of the environment outside the vehicle 110, e.g., towards the windshield, towards a window, atop the vehicle, etc. Additionally, and/or optionally, an image capture device 108 may be mounted to or positioned at a vehicle 110 in a manner such that the image capture device 108 captures image data of the interior of the vehicle. Interior-facing image capture devices 108 may be useful for detecting an event including detecting a person(s) of interest.

Alternatively, and/or optionally, mobile image systems 101A, 101B further include one or more image capture devices 108 coupled to a person and/or object wherein the object is not a vehicle. For example, an image capture device 108 can be coupled to a person, e.g., a helmet of a motorcycle driver.

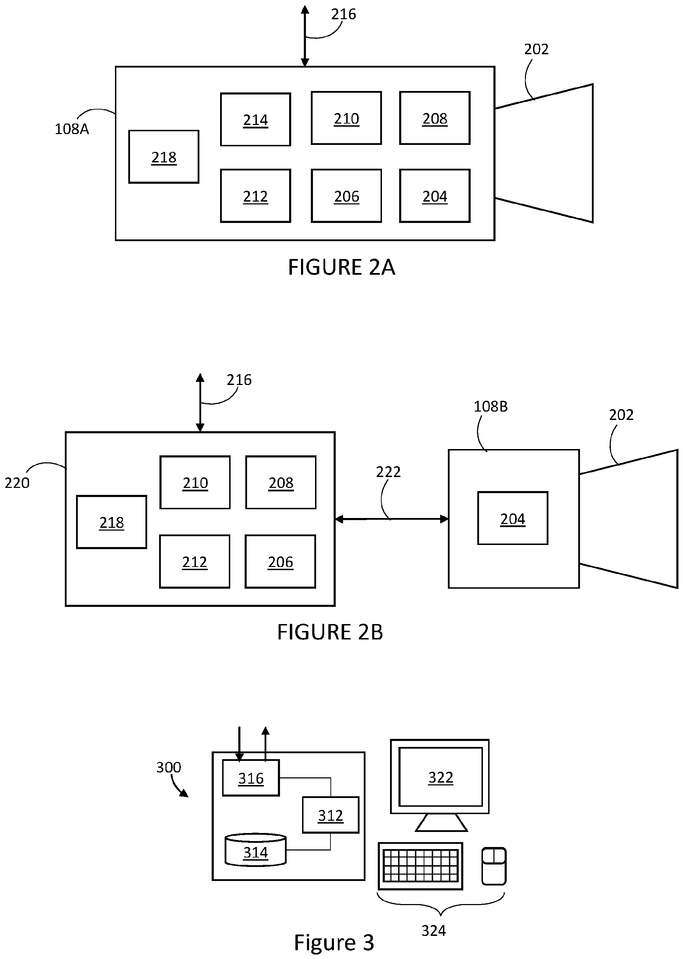

Now referring to Figure 2A, shown is a simplified block diagram of exemplary image capture device 108A according to one implementation (as a smart video camera). Image capture device 108A as shown in FIG. 2A can be implemented as any of the image capture devices 108 shown in Figures 1A and 1B. Image capture device 108A includes lens 202, optoelectronics 204, at least one processor 206, location module 208 (e.g., including a GPS receiver), wireless communication module 210 (e.g., including a 4G or 5G communication module for providing cellular connectivity) and at least one non-transitory processor-readable storage medium 212. Optionally, the at least one non-transitory processor-readable storage medium 212 includes another non-transitory processor-readable storage medium 214 (or includes any appropriate number of additional non-transitory processor-readable storage mediums). In the context of this disclosure, the term "datastore" refers to a non-transitory processor-readable storage medium. In some implementations, a single non-transitory processor-readable storage medium corresponds to a single datastore. In other implementations, a non-transitory processor-readable storage medium can be virtually partitioned to include a plurality of "datastores". Wireless communication module 210 is operable to communicate (shown as communication interface 216) with other devices (e.g. cloud device 106 or client device 104 discussed with reference to Figures 1A and 1B) over a communication network (e.g. cloud 112 discussed with reference to Figures 1A and 1B).

Further optionally, the image capture device 108A is shown as including at least one output interface 218, which can provide output to a driver of a vehicle in which the image capture device 108A is installed. For example, output interface 218 can be an audio output device (a speaker) which outputs audio for the driver to hear. As another example, output interface 218 can be a visual output device, such as a light or plurality of lights, or a display which outputs visual signals for the driver to see. As yet another example, output interface 218 can be a haptic output device, such as a vibration device, which outputs haptic signals for the driver to feel. Output interface 218 can be used to provide alerts, warnings, or feedback directly to the driver (such as tailgating indications), as discussed in detail later.

Now referring to FIG. 2B, shown is a simplified block diagram of exemplary image capture device 108B according to one implementation (as a camera which is coupled to a peripheral device, such as a vehicle device). Figure 2B includes many components with the same reference number as components discussed with reference to Figure 2A. The description of such components in Figure 2A is applicable to the similarly numbered components in Figure 2B. In Figure 2B, image capture device 108B includes lens 202 and optoelectronics 204. In this implementation, image capture device 108B is itself directed to capturing image data, which is in turn provided to a peripheral device 220 via a communication interface 222 (e.g. a wired or wireless communication interface). In some implementations, peripheral device 220 is a vehicle device, such as a telematics monitoring device positioned at a vehicle. In other implementations, peripheral device 220 comprises a collection of components integrated into a vehicle which communicate with each other (e.g. OEM integrated electronics). In Figure 2B, peripheral device 220 is shown as including the at least one processor 206, the location module 208, the wireless communication module 210, the at least one non-transitory processor-readable storage medium 212, and the output interface 218 similar to the components included in image capture device 108A in Figure 2A. While not illustrated in Figure 2B to reduce clutter, the at least one non-transitory processor-readable storage medium 212 optionally includes any appropriate number of additional non-transitory processor-readable storage mediums. Wireless communication module 210 is operable to communicate (shown as communication interface 216) with other devices (e.g. cloud device 106 or client device 104 discussed with reference to Figures 1A and 1B) over a communication network (e.g. cloud 112 discussed with reference to Figures 1A and 1B).

Collectively, reference to an image capture device 108 or a plurality of image capture devices 108 can include image capture device 108A in Figure 2A or image capture device 108B in Figure 2B. Further, reference to an image capture device performing acts (such as in the methods discussed herein) can also refer to the peripheral device 220 performing such acts. For example, reference to an image capture device performing processing, determination, identification, storing of data, transmission, or similar acts can refer to an image capture device and peripheral device in combination performing these acts.

Figure 3 is a schematic view of an operator device 300, which could be used for model management and use in any of the implementations discussed herein, and in particular is useful as a server-side device. For example, device 300 could be used as client device 104 in Figures 1A and 1B, or as a user interface device to provide input to these devices. Device 300 as illustrated includes at least one processor 312, at least one non-transitory processor-readable storage medium 314, and a communication interface 316. The non-transitory processor-readable storage medium 314 can have processor-readable instructions stored thereon which, when executed by the at least one processor 312 cause the device 300 to perform appropriate operations for the methods described herein. Communication interface 316 can be a wired or wireless interface, through which data and inputs can be provided to device 300, and through which data and outputs can be provided by device 300. For example, location data for a plurality of vehicles can be received from a telematics device or system by communication interface 316, for processing and analysis by the at least one processor 312. Resulting analysis can also be output by communication interface 316.

Figure 3 also illustrates exemplary input and output devices through which a user or operator can interact with device 300. In particular, Figure 3 shows a display 322, which can display outputs from device 300. Other output devices could be provided such as speakers, or any other appropriate output device. Figure 3 also shows a keyboard and mouse 324, which can be used to provide inputs to the device 300. Other input devices could also be used, such as a touchscreen, microphone, trackpad, or any other appropriate input device. Although the input and output devices illustrated in Figure 3 appear in the form of those used with a desktop computer, other forms of devices could also be used, such as portable devices like a laptop, smartphone, PDA, tablet, or any other appropriate device. Further, a device to which a user provides input and receives output can be remote from the device 300. For example, the device including the at least one processor 312, the at least one non-transitory processor-readable storage medium 314, and the communication interface 316 can be a server, which is remote from a workstation or device with which the user interacts.

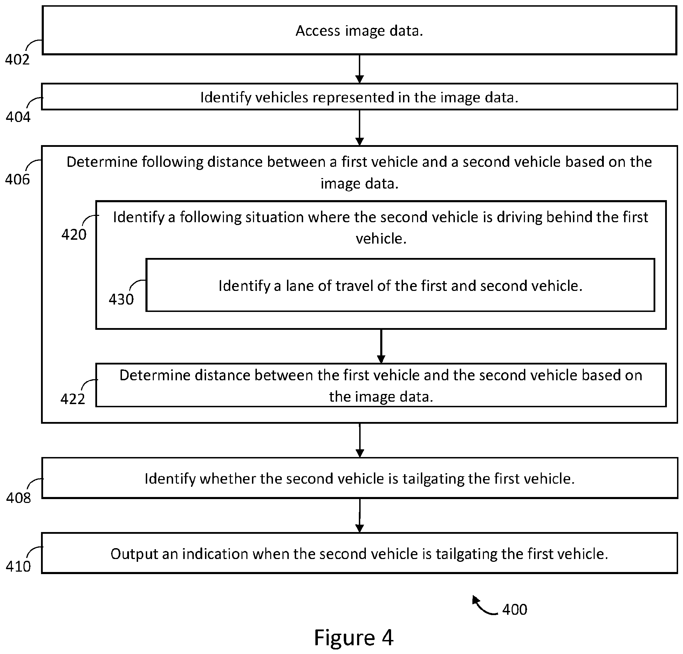

Figure 4 is a flowchart diagram which illustrates an exemplary method 400 for identifying and reporting a tailgating situation. Method 400 as illustrated includes acts 402, 404, 406 (including sub-acts 420, 422, and 430), 408, and 410. One skilled in the art will appreciate that additional acts could be added, acts could be removed, or acts could be reordered as appropriate for a given application. With reference to the examples illustrated in Figures 1A, 1B, 2A, 2B, and 3, acts can be performed by appropriate components of the discussed systems or devices. For example, method 400 can be performed at an image capture device such as image capture device 108A discussed with reference to Figure 2A, and/or a peripheral device such as peripheral device 220 discussed with reference to Figure 2B. As another example, method 400 can be performed at a device remote from a vehicle, such as client device 104 and/or local server 118 discussed with reference to Figures 1A and 1B, and/or cloud device 106 discussed with reference to Figure 1A.

Reference to "at least one processor" or "a processor" performing acts of any of the methods herein can refer to any appropriate processor. Further, at least one non-transitory processor-readable storage medium can store processor-executable instructions, which when executed by a respective at least one processor cause the corresponding system or device to perform a given act of any of the methods discussed herein.

At 402, image data is accessed. The image data is captured by an image capture device (such as image capture device 108A or 108B discussed with reference to Figures 2A and 2B), and stored by an appropriate non-transitory processor-readable storage medium (e.g. medium 212 in Figures 2A and 2B). In some implementations the image data is transferred from the image capture device to another device (such as from any of image capture device 108 in Figures 1A and 1B, to cloud device 106, client device 104, or local server 118, via communication interfaces 114, 116, 120, or 130) as appropriate. The image data is stored by a corresponding non-transitory processor-readable storage medium (e.g. any of mediums 104b, 118b, or 106b, as appropriate), and accessed in accordance with act 402 when method 400 is carried out.

At 404, at least one processor (e.g. processor 206, 104a, 118a, 106a, or 312 as appropriate) analyzes the image data to identify vehicles represented in the vehicle data (if any). For example, the at least one processor can run an object detection model (such as a vehicle detection model) trained to detect vehicles in image data. The YOLO models are exemplary models which are effective in this task.

At 406, a following distance is determined between two vehicles based on the image data. In particular, a following distance is determined between a first vehicle (a lead vehicle) and a second vehicle (a following vehicle) where the image capture device is positioned. The perspective of the image data thus represents a perspective from the second vehicle. Act 406 in method 400 is shown as including sub-acts 420 and 422. Sub-acts 420 and 422 show one exemplary implementation for determining following distance between the two vehicles, and could be replaced by any other appropriate means for determining following distance.

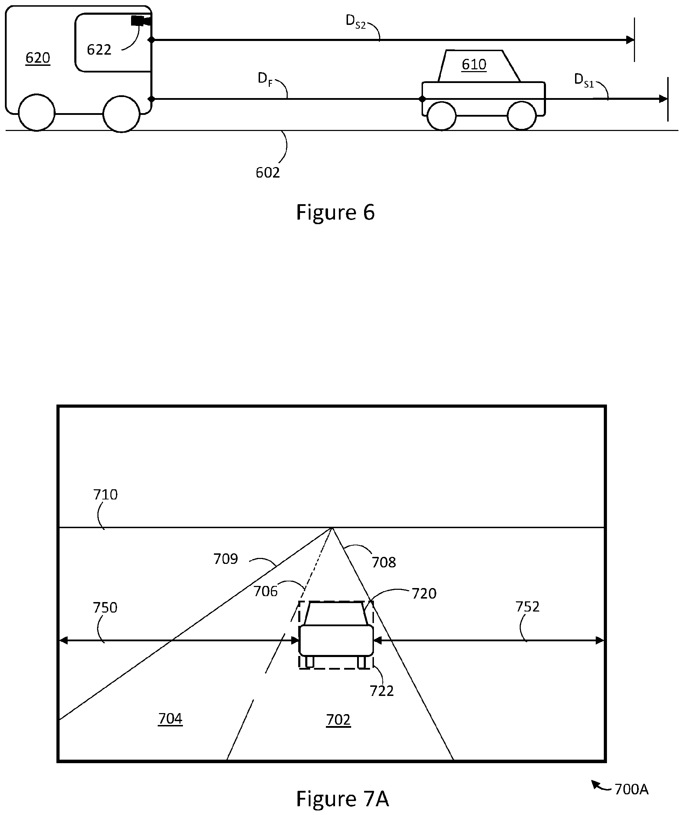

At 420, a following situation is identified where the second vehicle is driving behind the first vehicle. In some implementations, this entails determining a lane of travel of the first vehicle and of the second vehicle, as shown in sub act 430. If the determined lane of travel of the first vehicle is the same as the determined lane of travel of the second vehicle, the first and second vehicle are identified as travelling in the same lane. Alternatively, in some implementations, lanes do not need to be explicitly determined, nor does lane of travel of each vehicle need to be explicitly identified. Instead, a determination is made regarding whether the first vehicle and the second vehicle are travelling in a manner which indicates that the second vehicle is travelling behind the first vehicle. Such implementations are discussed later with reference to Figures 7A, 7B, 7C, 8A, 8B, 22, and 23.

At 422, a distance is determined between the first vehicle and the second vehicle. Throughout this disclosure, means for determining distance between two vehicles are discussed.

At 408, a determination is made as to whether the second vehicle is tailgating the first vehicle. Generally, this entails determining whether the distance between the first vehicle and the second vehicle determined at 422 is within tailgating criteria. Such tailgating criteria can be static or dynamic, and is discussed in more detail later with reference to Figure 6.

At 410, an indication is output when the second vehicle is tailgating the first vehicle. For example, an alert can be output by a device in the second vehicle (e.g. output interface 218 in Figures 2A or 2B), informing the driver of the tailgating situation to encourage the driver to increase following distance. As another example, a notification could be triggered at a management device (e.g. client device 104), or sent to the management device from an in-vehicle device, indicating the tailgating situation, for a fleet manager to take corrective action such as enforcing driver training. Such a notification could optionally include any of a timestamp, geographic position data of the vehicle for the tailgating event, speed or acceleration data for the vehicle for the tailgating event, image data for the tailgating event, or any other appropriate data.

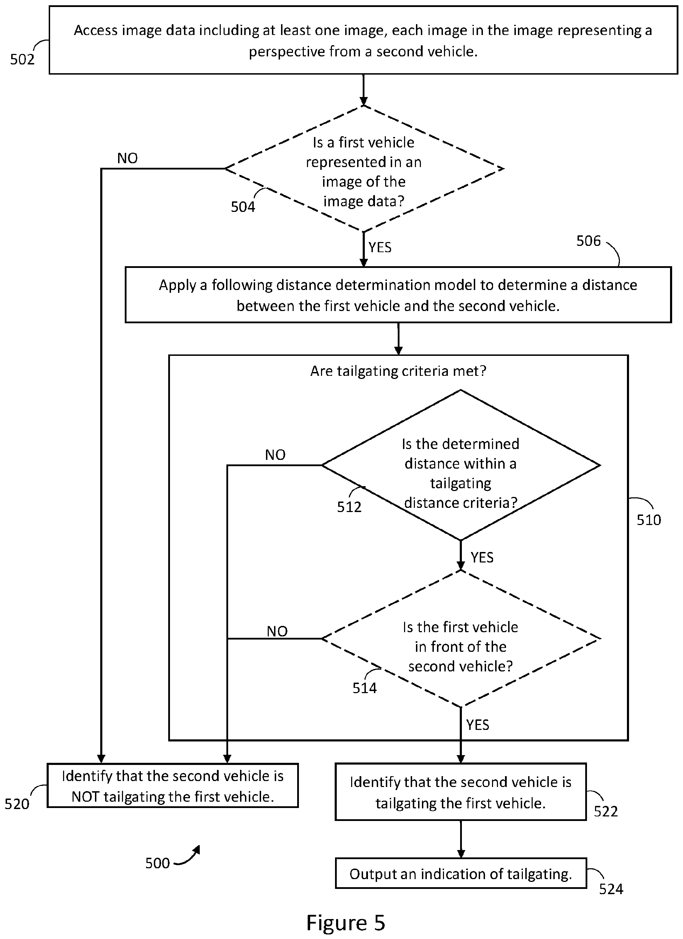

Figure 5 is a flowchart diagram which illustrates an exemplary method 500 for detecting tailgating. Method 500 can be applied to real-world images (images captured by an image sensor) to detect real-world tailgating. Further, method 500 can also be applied to simulated images (images generated by simulation), for the purposes of testing, validation, training of other models, or any other appropriate application. Method 500 as illustrated includes acts 502, 504, 506, 510 (including sub-acts 512 and 514), 520, 522, and 524. One skilled in the art will appreciate that additional acts could be added, acts could be removed, or acts could be reordered as appropriate for a given application. As one example, act 504 is shown in dashed lines to highlight that this act is optional (e.g. identifying whether the first vehicle is represented in the image data may be inherently performed as part of sub-act 512 later). As another example, sub-act 514 is shown in dashed lines to highlight that this sub-act is optional (e.g. for single lane roadways).

Acts of method 500 can be performed by appropriate components of the systems or devices discussed earlier. For example, method 500 can be performed at a device remote from a vehicle, such as client device 104 or local server 118 discussed with reference to Figures 1A and 1B, and/or cloud device 106 discussed with reference to Figure 1A.

Reference to "at least one processor" or "a processor" performing acts of any of the methods herein can refer to any appropriate processor. Further, at least one non-transitory processor-readable storage medium can store processor-executable instructions, which when executed by a respective at least one processor cause the corresponding system or device to perform a given act of any of the methods discussed herein.

Importantly, a system or device which performs method 500 is not necessarily the same hardware which trains models. In this way, model training and model execution can be performed by discrete systems or devices most suited to the task. For example, a central server (e.g. any of client device 104, cloud server 106, or local server 118) can perform model training, and a device at a vehicle (e.g. image capture device 108A or peripheral device 220) can apply the model based on image data captured at the vehicle. However, in some implementations, a single device or system can perform all of training a model, and applying the model.

At 502, image data including at least one image is accessed. Each image in the image data represents a perspective from a second vehicle (which may be following a first vehicle, as is to be determined by method 500). Figures 7A, 7B, 7C, 8A, 8B, 11, 22, and 23 discussed later show images from the perspective of a second vehicle, which may or may not be travelling behind a first vehicle.

In some implementations, accessing the image data in act 502 comprises accessing stored image data (e.g. simulated or captured image data which is stored at a non-transitory processor-readable storage medium). In other implementations, accessing the image data in act 502 comprises capturing the image data (e.g. image data from an image capture device is provided directly to at least one processor which applies the tailgating detection algorithm). In yet other implementations, accessing the image data comprises receiving the image data by a communication interface of the system or device which is performing method 500 (e.g. from a remote device or datastore).

At 504, the at least one processor determines whether a first vehicle is represented in an image of the image data. For example, the at least one processor can run a feature or object detection model (such as a YOLO model) to detect vehicles in the image data. If a first vehicle is not represented in an image of the image data, then method 500 proceeds to act 520, where the at least one processor determines that the second vehicle is not tailgating the first vehicle (since there is no first vehicle to tailgate). If a first vehicle is detected in the image data at 504 (or if act 504 is not performed), method 500 proceeds to act 506.

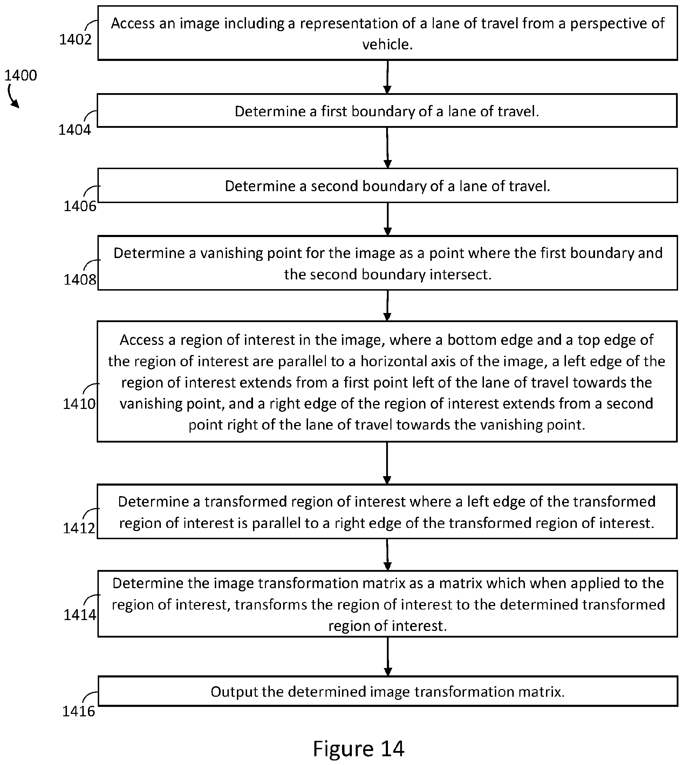

At 506, the at least one processor applies a following distance determination model to determine a distance between the first vehicle and the second vehicle. The applied model can be any of the models discussed herein, such as a model designed as discussed with reference to Figure 14. "Applying" a model generally refers to providing the at least one image to the model as input, and received a determined distance between the first vehicle and the second vehicle as output. In some implementations the model may also be used to determine whether the first vehicle is represented in the image data (at least in a manner which is useful for determining distance between the first vehicle and the second vehicle), in place of act 504 discussed above. For example, the model can be designed to output a null value (or a value which indicates a distance so great tailgating is not possible), which indicates that the second vehicle is not following the first vehicle to any extent close to tailgating.

At 510, the at least one processor determines whether tailgating criteria are met. In method 500 in Figure 5, two tailgating criteria are discussed with reference to sub-acts 512 and 514, though one skilled in the art will appreciate that any number of tailgating criteria could be implemented as appropriate for a given application. Further, both of the tailgating criteria shown in sub-acts 512 and 514 are not required; in particular sub-act 514 is shown in dashed lines to illustrate optionality of this criteria. Further, although Figure 5 shows sub-act 512 followed by sub-act 514, tailgating criteria can be evaluated in any appropriate order.

At 512, the at least one processor determines whether the distance determined at 506 is within tailgating distance criteria. That is, the at least one processor determines whether the distance between the first vehicle and the second vehicle is an unsafe distance.

Generally, tailgating distance criteria is dependent on speed of travel of the vehicles. Equation (1) below illustrates an exemplary tailgating threshold distance. For implementations which use tailgating threshold distance as tailgating distance criteria, when a distance between two vehicles is less than the tailgating threshold distance, the tailgating distance criteria is satisfied.

$$D_T = \frac{4m * v}{10 km/h} \qquad\qquad (1)$$

In Equation (1), $D_T$ represents tailgating threshold distance, and $v$ represents speed (typically of the second vehicle) in kilometers per hour (*km/h*). Stated differently, in Equation (1), a safe following distance is approximately four meters for every 10 km/h of speed of the vehicle. In the example, v represents speed of the second vehicle. This is because the speed of the second vehicle is more readily available (e.g. is collected by a telematics monitoring device installed in the second vehicle, or by hardware associated with the image capture device in the second vehicle). Speed of the first vehicle is often more difficult to obtain, because the first vehicle may not be associated with the same telematics system as the second vehicle, and therefore data may not be collected from the first vehicle. However, in some implementations the speed of the first vehicle could be determined relative to the speed of the second vehicle, by determining a difference in distance between the first vehicle and the second vehicle over time. In other implementations, the speed of the first vehicle could be determined by a machine learning model trained to estimate vehicle speed. In yet other implementations, the first vehicle can be part of the same telematics system as the first vehicle, and therefore speed data for the first vehicle may be accessible.

Equation (1) above is a generalization. More factors can be taken into account to arrive at a more specific tailgating distance criteria, thus reducing false positive and false negative tailgating determinations. Figure 6 and Equation (2) discussed below provide an example.

Figure 6 is a side view of a second vehicle 620 having image capture device 622, positioned behind a first vehicle 610. Both vehicles 610 and 620 are travelling in the same direction on ground surface 602. Figure 6 shows a following distance $D_F$ between the first vehicle and the second vehicle. Figure 6 also shows a minimum stopping distance $D_{S1}$ of vehicle 610 (i.e., in how short a distance is vehicle 610 capable of stopping) and a maximum stopping distance $D_{S2}$ of vehicle 620 (i.e., what is the longest distance vehicle 620 is expected to be able to stop within). $D_{S1}$ is shown as starting from the rear of vehicle 610, such that $D_{S1}$ represents the point of vehicle 610 which vehicle 620 would hit if a collision were to occur. However, $D_{S1}$ can start from any appropriate point of vehicle 610, where a distance between the rear of vehicle 610 and the start point of $D_{S1}$ is taken into account in determining tailgating in Equation (2) below. $D_{S1}$ and $D_{S2}$ are discussed in more detail later. In this example, the tailgating criteria for distance is evaluated based on Equation (2) below.

$$Tailgating\ when: D_{S2} > (D_F + D_{S1}) \qquad\qquad (2)$$

In Equation (2), if vehicle 620 is not able to stop within the distance presently between the vehicles, plus the distance for vehicle 610 to stop, then the following distance $D_F$ is considered as within tailgating distance criteria.

Stopping distances for vehicles (such as $D_{S1}$ and $D_{S2}$ above, collectively $D_S$) can take into account a number of factors, such as vehicle speed, vehicle weight (weight of vehicle itself, possibly including load), road coefficient of friction (e.g. based on weather data indicating good weather, rain, snow, etc.), driver response time (e.g. based on a historical driver profile), or any other appropriate factors.

In the interests of safety, it is generally preferred to bias determination of a stopping distance for a lead vehicle (e.g. vehicle 610 in Figure 6) with factors in favor of the vehicle stopping quickly. For example, as it is generally difficult to determine a load weight of a vehicle based on image data, the lead vehicle can be assumed to be unloaded, such that the vehicle weight is estimated only as the weight of the vehicle itself. In this regard, the weight of the vehicle could be determined (or approximated) by identifying the model of the vehicle (or at least class of the vehicle) using a feature or object detection model. As another example, the driver of the lead vehicle may be assumed to have fast reaction times (e.g. above average reaction times), since actual reaction times of the driver of the lead vehicle are likely unknown.

Similarly in the interests of safety, it is generally preferred to bias determination of a stopping distance for a following vehicle (e.g. vehicle 620 in Figure 6) with factors in favor of the vehicle stopping slowly. For example, vehicle load can be estimated based on acceleration, vehicle RPM, and actual speed (see for example US Patent Application Nos. 63/279,737; 17/532,209; 17/979,119; 63/413,035; 63/430,514; 63/445,753; and 18/111,951); when estimating vehicle load for the purpose of determining stopping distance, this determination can be biased to estimate the vehicle to be heavier than it may actually be. As another example, road coefficient of friction can be assumed to be low if a weather service says that there is a moderate chance of rain, even if water on the road is not explicitly identified based on image data.

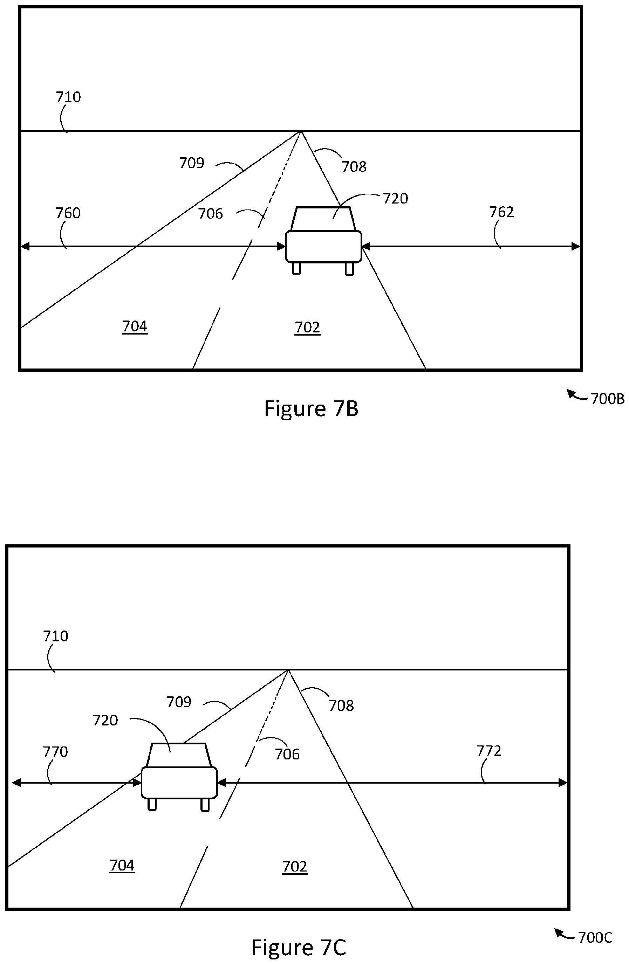

Returning to method 500 in Figure 5, if the following distance is NOT within a tailgating distance criteria, method 500 proceeds to act 520, where the at least one processor identifies that the second vehicle is not tailgating the first vehicle. If the following distance IS within a tailgating distance criteria, and if sub-act 514 (or any other tailgating criteria) are not included, method 500 proceeds to act 522, where the at least one processor identifies that the second vehicle is tailgating the first vehicle. If on the other hand sub-act 514 is included, then method 500 proceeds to act 514, where the at least one processor determines whether the first vehicle is in front of the second vehicle. Examples are discussed below with reference to Figures 7A, 7B, and 7C. Although method 500 in Figure 5 shows sub-act 512 before sub-act 514, the order of these acts can be reversed in alternative implementations. That is, prior to whether determined distance is within tailgating criteria (or even prior to even applying the following distance model in act 506), the at least one processor can first determine whether the first vehicle is in front of the second vehicle. Alternatively, in some implementations act 514 can be included inherently in the following distance determination model applied at 506. In such an implementation, acts 514 would be redundant, and can be omitted.

Figures 7A, 7B, and 7C each show a vehicle 720 driving along a roadway shown by edges 708 and 709, towards a horizon 710. The roadway has two lanes 702 and 704, separated by dividing line 706. A vehicle is driving behind vehicle 720, and has the camera which the perspective of each of images 700A, 700B, and 700C represents.

In accordance with act 504 of method 500, vehicle 720 is identified in images 700A. In Figure 7A, bounding box 722 is shown around vehicle 720, representing where a feature detection model determines vehicle 720 as being. Vehicle 720 can be identified with a similar bounding box in Figures 7B and 7C as well, but such a bounding box is not illustrated to reduce clutter.

In one exemplary implementation, a feature detection model is applied to identify road lanes (e.g. based on road edges 708, 709, and dividing line 706). Once lanes are identified, the at least one processor determines a lane of travel of the vehicle carrying the image capture device (in the illustrated example, lane 702). Vehicles travelling in the same lane as the vehicle with the image capture device are considered to be "in front" of the second vehicle in the context of sub-act 514 in method 500. In this exemplary implementation, vehicle 720 in image 700A and vehicle 720 in image 700B are considered "in front" of the second vehicle, whereas vehicle 720 in image 700C is not considered "in front" of the second vehicle.

In another exemplary implementation, distances from the edges of captured images are used to determine whether the lead vehicle (vehicle 720 in the illustrated example) are travelling "in front" of the second vehicle in the context of method 500.

In this regard, Figure 7A shows a left-distance 750 representing a distance of vehicle 720 from the left edge of image 700A. Such a left-distance 750 can be determined as a distance from the left edge of bounding box 722 to the left edge of image 700A. Alternatively, such a left-distance 750 can be determined as a distance from a feature on the left side of vehicle 720 to the left edge of image 700A. Figure 7A also shows a right-distance 752 representing a distance of vehicle 720 from the right edge of image 700A. Such a right-distance distance 752 can be determined as a distance from the right edge of bounding box 722 to the right edge of image 700A. Alternatively, such a right-distance 752 can be determined as a distance from a feature on the right side of vehicle 720 to the right edge of image 700A. The left-distance and right-distance can be represented, for example, as numbers of pixels in the image data. A difference between the left-distance and the right-distance is determined by the at least one processor (e.g. by subtraction). If the determined distance is within a horizontal distance threshold, the first vehicle (vehicle 720 in the example) is determined as being in front of the second vehicle in sub-act 514 in method 500.

In the example of Figure 7A, left-distance 750 and right-distance 752 are nearly identical, such that a difference therebetween is small (and within the horizontal distance threshold). As a result, in the example of Figure 7A, vehicle 720 is determined as being in front of the second vehicle in sub-act 514 in method 500, such that (provided the second vehicle is determined to be within a tailgating distance in sub-act 512) method 500 proceeds to act 522, where the at least one processor identifies that the second vehicle is tailgating the first vehicle.

Figure 7B shows a left-distance 760 representing a distance of vehicle 720 from the left edge of image 700B, and shows a right-distance 762 representing a distance of vehicle 720 from the right edge of image 700B. In this example, vehicle 720 is positioned further to the right than in Figure 7A. As a result, left-distance 760 and right distance 762 have some difference. However, this difference is relatively small (representing less than half a road lane), such that the difference is within the horizontal distance threshold. As a result, in the example of Figure 7B, vehicle 720 is determined as being in front of the second vehicle in sub-act 514 in method 500, such that (provided the second vehicle is determined to be within a tailgating distance in sub-act 512) method 500 proceeds to act 522, where the at least one processor identifies that the second vehicle is tailgating the first vehicle.

Figure 7C shows a left-distance 770 representing a distance of vehicle 720 from the left edge of image 700C, and shows a right-distance 772 representing a distance of vehicle 720 from the right edge of image 700C. In this example, vehicle 720 is positioned further to the left than in Figures 7A and 7B. As a result, left-distance 770 and right-distance 772 have a significant difference (representing an entire road lane), such that the difference is outside of the horizontal distance threshold. As a result, in the example of Figure 7C, vehicle 720 is determined as NOT being in front of the second vehicle in sub-act 514 in method 500. As a result, method 500 proceeds to act 520, where the at least one processor identifies that the second vehicle is NOT tailgating the first vehicle.

In some scenarios, the first vehicle driving in front of a second vehicle does not necessarily result in image data where the first car appears horizontally centered in the image data. For example, a horizontal positioning of an image capture device at the second vehicle results in different perspectives of the first vehicle as represented in captured image data. One way to address this is to install image capture devices to be as close as possible to a horizontal center of vehicles. However, this is not always possible or practical. For example, obstructions may prevent installation of an image capture device near a horizontal center of a vehicle; image capture devices may already be installed away from the horizontal center; or installers may not always install image capture devices in horizontal central location for any number of reasons.

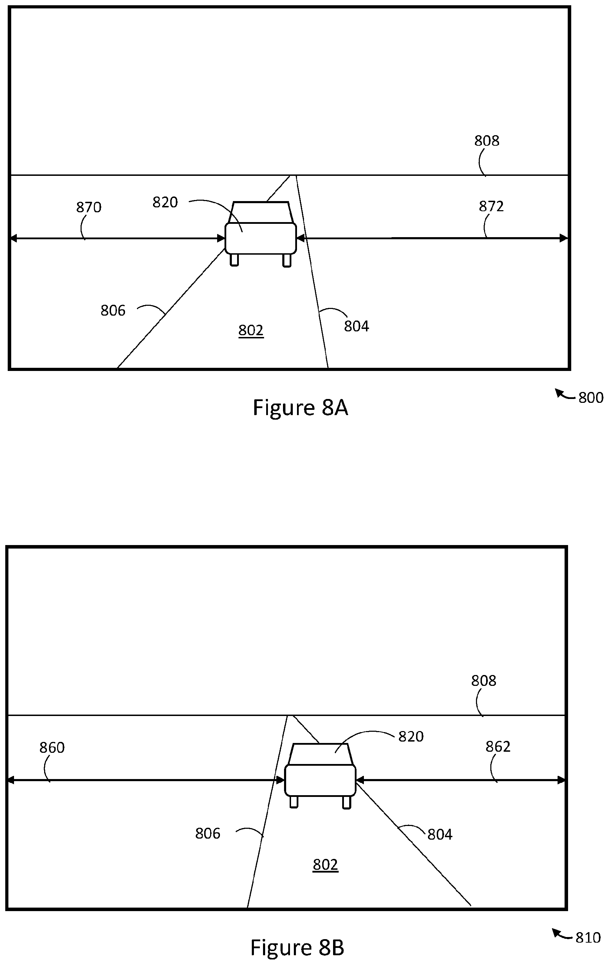

In view of the above, calibration can be performed such that the horizontal distance threshold accounts for non-centered bias of the image data (e.g. due to the image capture device being positioned away from a horizontal center of the second vehicle in the context of method 500 of Figure 5). This is discussed below with reference to Figures 8A and 8B.

Figure 8A shows an image 800 captured by an image capture device positioned towards the right side of a vehicle. In image 800, vehicle 820 can be seen, driving on roadway 802 (as bounded by edges 804 and 806), toward horizon 808. Figure 8B shows an image 810 captured by an image capture device positioned towards the left side of a vehicle. In image 810, vehicle 820 can be seen, driving on roadway 802 (as bounded by edges 804 and 806), toward horizon 808. In image 800, the roadway 802 appears more on the left side, due to the perspective of the image capture device. In contrast, in image 810 the roadway 802 appears more on the right side due to the perspective of the image capture device.

In addition to what is discussed above, Figure 8A also shows a left-distance 870 from the left edge of image data 800, and a right-distance 872 from the right edge of image 800. In the case of Figure 8A, the second vehicle is travelling behind the first vehicle (vehicle 820), but left-distance 870 is smaller than right-distance 872, due to the perspective of the image capture device which captures image 800. To address this, for determining whether the first vehicle is in front of the second vehicle at 514 in method 500, the system can be calibrated, such that the horizontal distance threshold represents a value around a difference between left-distance 870 and right-distance 872. For example, an actual "center" which represents horizontal alignment in front of the vehicle which carries the image capture device which captures image data 800 is a positive value resulting from subtracting left-distance 870 from right-distance 872. In this example, the horizontal distance threshold represents a threshold around said positive value. As another example, an actual "center" which represents horizontal alignment in front of the vehicle which carries the image capture device which captures image data 800 is a negative value resulting from subtracting right-distance 872 from left-distance 870. In this example, the horizontal distance threshold represents a threshold around said negative value.

In the case of Figure 8B, the second vehicle which carries the image capture device which captures image 810 is travelling behind the first vehicle (vehicle 820), but left-distance 860 is larger than right-distance 862, due to the perspective of the image capture device. To address this, for determining whether the first vehicle is in front of the second vehicle at 514 in method 500, the system can be calibrated, such that the horizontal distance threshold represents a value around a difference between left-distance 860 and right-distance 862. For example, an actual "center" which represents horizontal alignment in front of the vehicle which carries the image capture device which captures image data 810 is a negative value resulting from subtracting left-distance 860 from right-distance 862. In this example, the horizontal distance threshold represents a threshold around said negative value. As another example, an actual "center" which represents horizontal alignment in front of the vehicle which carries the image capture device which captures image data 810 is a positive value resulting from subtracting right-distance 862 from left-distance 860. In this example, the horizontal distance threshold represents a threshold around said positive value.

Generally, an optimal horizontal distance threshold is determined as appropriate for a specific application or implementation. This is because different camera hardware, different camera positioning, different vehicle features, or any number of other factors can influence optimal horizontal distance threshold.

Returning to method 500 in Figure 5, after the second vehicle is identified as tailgating the first vehicle at 522, method 500 proceeds to act 524. At 524, an indication of tailgating is output. Such output can take any appropriate form, but some non-limiting examples are discussed below.

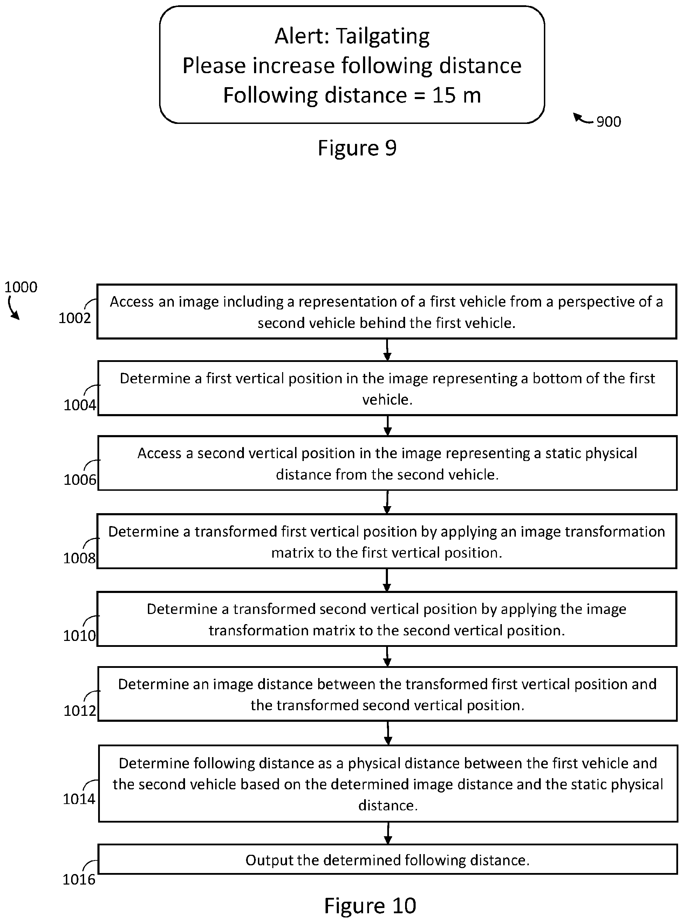

In some implementations, outputting the indication of tailgating comprises outputting an alert to a driver of the second vehicle (e.g. by output interface 218 in Figure 2A or 2B). Such an alert serves to warn the driver of the dangerous situation, so that the driver can take action to remedy it. In this regard, Figure 9 illustrates an exemplary user interface 900 where a visual alert is displayed indicating the tailgating situation. Such a visual user interface could comprise any appropriate display in the second vehicle, such as an infotainment display built into the second vehicle, an accessory device (such as a tablet or smartphone) used by the driver (e.g. for navigation, logging, or vehicle management), a navigation device, or any other display appropriate for a given application. In some implementations, an audio output device can present an audio alert to the driver, such as a statement of the situation, or an alarm sound. In some implementations, multiple forms of alert can be presented in tandem. For example, a visual alert can be displayed as shown in Figure 9, and an audio alarm can be sounded which prompts the user to look at the visual alert.

Figure 9 also shows an outputting of a determined following distance (15 meters, in the illustrated example). This indication can be output together with a tailgating alert, as shown in Figure 9, but this is not necessarily required. In some implementations, an indication of following distance can be output to a driver of the vehicle, even without a warning of tailgating, or even without a tailgating situation. For example, following distance could be displayed as one piece of information among many pieces of information on a dashboard display. Further, an indication of following distance can be presented by any appropriate output device, including a display or audio devices as discussed earlier.

In some implementations, outputting the indication of tailgating comprises transmitting an alert, notification, or report of the tailgating situation to a management device (such as any of client device 104, cloud server 106, or local server 118 discussed with reference to Figures 1A or 1B). Such an alert is useful for evaluating driver performance, providing rewards for safe driving (e.g. for drivers where minimal dangerous situations are reported), and taking disciplinary or training action for unsafe driving (e.g. for drivers where excess dangerous situations are reported). Such reporting does not necessarily need to be in real-time (although it can be), since administrative actions based on driver performance are typically taken some time after any instances of poor driving. Consequently, in some implementations, act 524 in method 522 comprises storing an indication or report of tailgating, and later reported any stored indications to a management device together in a scheduled (or requested) report.

Outputting an indication of tailgating as in act 524 is not limited to outputting a single indication of tailgating. In some implementations, an indication of tailgating can be output to the driver (e.g. as discussed with reference to Figure 9), and can be output to a management device as discussed above.

Figure 10 is a flowchart diagram which illustrates another exemplary method 1000 for determining following distance. Method 1000 can be applied to real-world images (images captured by an image sensor) to detect real-world following distance. Further, method 1000 can also be applied to simulated images (images generated by simulation), for the purposes of testing, validation, training of other models, or any other appropriate applications. Method 1000 as illustrated includes acts 1002, 1004, 1006, 1008, 1010, 1012, 1014, and 1016. One skilled in the art will appreciate that additional acts could be added, acts could be removed, or acts could be reordered as appropriate for a given application. Acts of method 1000 can be performed by appropriate components of the systems or devices discussed earlier, similar to as discussed with reference to method 500 in Figure 5, and not repeated for brevity.

Method 1000 can be implemented for example within the context of detecting tailgating. For example, method 1000 in Figure 10 can be implemented as act 506 in method 500 in Figure 5. In this way, method 1000 can be used to determine following distance between two vehicles, and method 500 can use the determined following distance to identify tailgating between the two vehicles as discussed earlier.

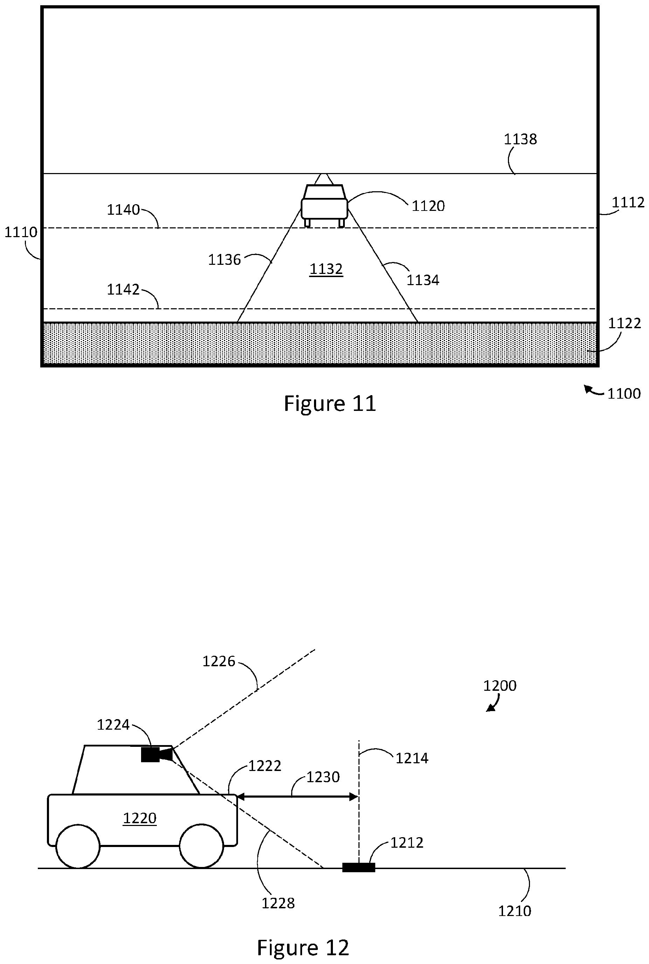

Method 1000 is discussed below in the context of a first exemplary scenario illustrated in Figure 11. However, method 1000 is applicable to many different scenarios. Figure 11 illustrates an image 1100 having a left boundary 1110 and a right boundary 1112. Image 1100 shows a vehicle 1120 (the first vehicle in method 1000) driving along a roadway 1132 shown by edges 1134 and 1136, towards a horizon 1138. A vehicle (the second vehicle in method 1000) is driving behind vehicle 1120, and carries the image capture device which the perspective of image 1100 represents (i.e., the camera which captures image 1100). A hood 1122 of the second vehicle is visible at the bottom of image 1100.

Returning to method 1000, at 1002, an image is accessed by a system or device performing method 1000. The image includes a representation of a first vehicle from a perspective of a second vehicle behind the first vehicle. The image further represents a common lane of travel of the first vehicle and the second vehicle. Image 1100 shown in Figure 11 is an exemplary image which can be accessed in this regard, where vehicle 1120 is the first vehicle, hood 1122 is part of the second vehicle, roadway 1132 includes the common lane of travel as shown by boundaries 1134 and 1136. While roadway 1132 in Figure 11 is shown as a single-lane road to reduce clutter, the present disclosure is fully applicable to multi-lane roadways, where the first vehicle and the second vehicle travel in one common lane of multiple possible lanes. In some implementations, accessing the image comprises capturing the image, by at least one image capture device positioned at the second vehicle. In other implementations, accessing the image comprises receiving the image by a device or system performing method 1000 (e.g., a server which performs method 1000 can receive the image as transmitted from an image capture device at a vehicle which captured the image). In yet other implementations, accessing the image comprises accessing the image as stored in at least one non-transitory processor-readable storage medium (e.g., the image is previously captured by an image capture device, and stored at a non-transitory processor-readable storage medium at a vehicle or at a server for later retrieval when performing method 1000).

At least one processor of the system or device which performs method 1000 can optionally preprocess the accessed image data as appropriate. For example, the image data can be cropped to a defined resolution, or image correction can be applied such as distortion to compensate for skewing in the image due to properties of the image capture device. As examples, radial distortion and/or tangential distortion of the image data can be compensated for. In some implementations, the accessed image data is already pre-processed to be of a desired resolution and/or to have distortion corrected, prior to access and utilization in method 1000.

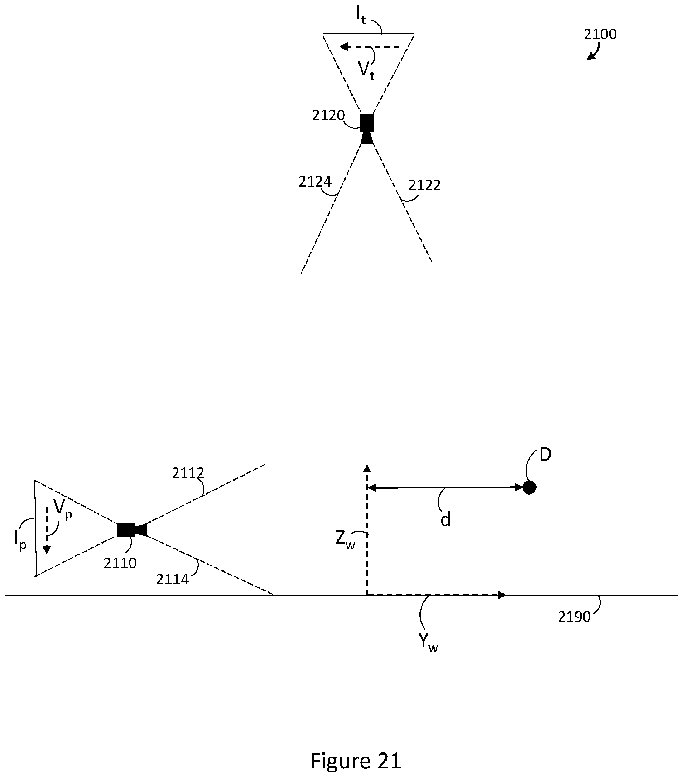

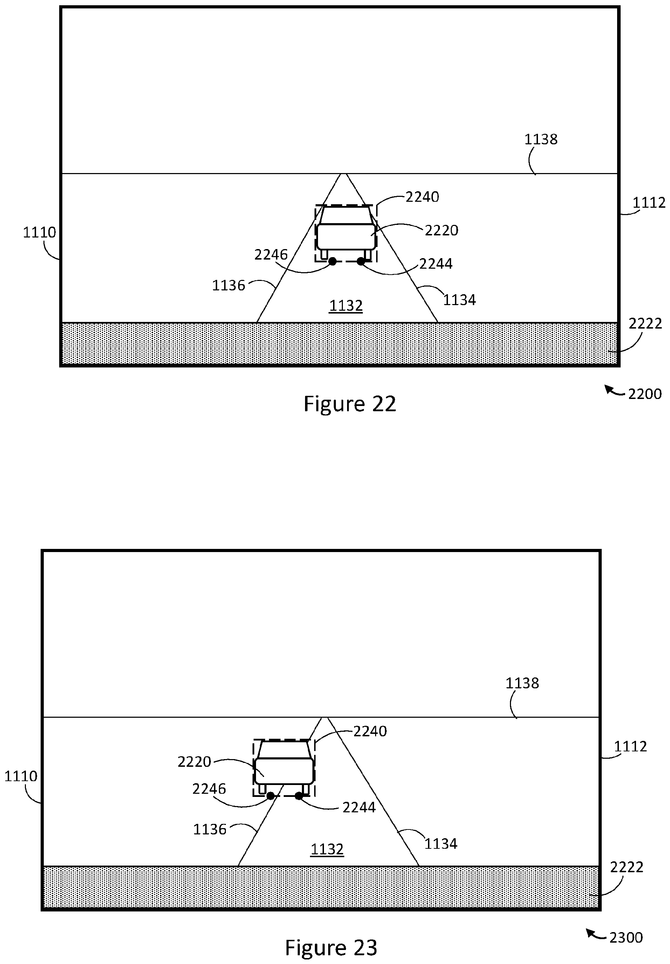

Further, in some implementations preliminary analysis can be performed to determine whether an image includes a representation of a first vehicle from a perspective of a second vehicle behind the first vehicle. An example of such analysis is discussed earlier with reference to Figure 5, and is fully applicable to method 1000 in Figure 10. In particular, in some cases the first vehicle may not be represented in the image, or may be represented in a way that is not relevant, such as being represented so far away from the second vehicle that tailgating considerations are not relevant. In such cases method 1000 can be largely averted. In other cases, multiple vehicles may appear in the image, and the image can be analyzed to determine which vehicle (if any) qualifies as the first vehicle in the context of method 1000. This can be achieved by determining which vehicle (if any) is traveling in front of (in a common lane of travel as) the second vehicle. If multiple vehicles are travelling in a common lane of travel with the second vehicle, the closest vehicle can be selected as the first vehicle. Exemplary techniques for detecting a vehicle in front of another vehicle are discussed earlier with reference to Figures 7A, 7B, 7C, 8A, 8B and are fully applicable in the context of method 1000 in Figure 10. As another example, determination of the first vehicle can be performed based on lane boundaries, as discussed later with reference to Figures 21 and 22.

At 1004, at least one processor determines a first vertical position in the image representing a bottom of the first vehicle. In this regard, Figure 11 shows first vertical position 1140 representing a bottom of first vehicle 1120 as it appears in image 1100. First vertical position 1140 is shown as a line which extends horizontally across image 1100 to illustrate that the first vertical position 1140 may be only a height coordinate in the image, regardless of horizontal position. Alternatively, the first vertical position 1140 may also include a horizontal coordinate, for example centered at the first vehicle 1120 or centered in roadway 1132 (or the common lane of travel). Further, the bottom of the first vehicle 1120 in Figure 11 is shown as the bottom of tires of the vehicle 1120, but other reference points could be used, such as a bottom of a chassis of vehicle 1120.

In order to determine the first vertical position, a variety of techniques could be used. In one example, an object detection model (such as a YOLO model) can be run on image 1100, to output a bounding box which surrounds vehicle 1120 (similar to bounding box 722 shown in Figure 7A, and not shown in Figure 11 to reduce clutter). A bottom coordinate of such a bounding box can be used as the first vertical position. Alternatively, a feature detection model can be utilized which identifies specific features of vehicle 1120, and identifies a particular feature which is identified as delineating the "bottom" of the first vehicle (e.g. a rear bumper of the first vehicle).

At 1006, a second vertical position 1142 in the image is accessed (e.g. by the at least one processor). The second vertical position 1142 represents a static physical distance from the second vehicle. In this regard, the second vertical position 1142 can be determined during a calibration of the image capture device installed in the second vehicle, where a particular image distance (e.g. number of pixels) from a bottom boundary of images captured by the image capture device is correlated to a particular physical distance from the second vehicle. In the example of Figure 11, the second vertical position 1142 is shown as being slightly above hood 1122 of the second vehicle (slightly ahead of the front of the second vehicle in physical space). However, other specific positions are possible as the second vertical position 1142, such as a position on hood 1122, or a position at a very front of hood 1122. The second vertical position 1142 can be stored in at least one non-transitory processor-readable storage medium of the system performing method 1000, and accessed (or retrieved) as needed. An exemplary (non-limiting) procedure for calibrating the image capture device and determining the second vertical position 1142 is discussed below with reference to Figure 12.

Figure 12 is a side view of an exemplary scenario 1200, in which a vehicle 1220 is positioned on a surface 1210. In scenario 1200, vehicle 1220 is stationary. A marker 1212 is also positioned on surface 1210, and a projection 1214 is shown extending upwards from marker 1212 (perpendicular to surface 1210). An image capture device 1224 is positioned at vehicle 1220, and captures image data within a field of view shown by field of view lines 1226 and 1228. A hood 1222 of vehicle 1220 is partially captured within field of view lines 1226 and 1228. A physical distance 1230 between a front of vehicle 1220 and marker 1212 (or projection 1214 from marker 1212) is shown, and could be determined for example by manual measurement. This physical distance 1230 can then be correlated to an image distance in image data captured by image capture device 1224, the image distance corresponding to where marker 1212 appears in the captured image data. That is, a static physical distance (physical distance 1230) is determined which is represented by the second vertical position accessed in act 1006 of method 1000.

In some implementations, the static physical distance can be 0, such as by placing marker 1212 immediately adjacent vehicle 1220. This can simplify distance calculations, by may not be possible in all configurations, particularly if the marker 1212 cannot be seen in the field of view of image capture device 1224.

Figure 12 illustrates one exemplary procedure for correlating the second vertical position and a static physical distance. However, other implementations are possible, such as using an object (e.g. a sign) instead of a surface-based marker. Further, the procedure described in Figure 12 does not need to be performed in the context of method 1000 in Figure 10, but rather can be performed prior to said method, as part of an initialization or calibration of the image capture device in the second vehicle.

Due to perspective, in ordinary image data from an image capture device in a vehicle, the relationship between following distance in the real world (physical distance between the first and second vehicles in image 1100) and image distance in the image data (e.g. quantity of pixels between the first vehicle and the second vehicle as representing in image 1100) is not fixed. That is, the higher up a pixel is vertically in the image (the further forward in physical space the pixel represents), the greater the distance represented by the pixel. Consequently, it is challenging to determine following distance between vehicles based on image data. To address this, method 1000 in Figure 10 transforms the image data (or at least key points of the image data) to arrive at a fixed relationship between image distance and physical distance (e.g. physical distance between the first and second vehicles). This is discussed with reference to acts 1008 and 1010 below. This fixed relationship can be expressed, for example, as a ratio between a number of pixels in the image and physical distance represented by said number of pixels. For example, a ratio of image distance to physical distance could be 1 meter per 10 pixels, 1 meter per 50 pixels, 1 meter per 100 pixels, or any other appropriate ratio. Further, in some cases two different fixed relationships can be used, such as a first ratio between a first number of pixels in a horizontal direction of the image and physical distance represented by said number of pixels, and a second ratio between a second number of pixels in a vertical direction of the image and physical distance represented by said number of pixels. In one illustrative example, one meter of physical distance is represented by 75.998 pixels in the horizontal direction (x axis), whereas one meter of physical distance is represented by 109.202 pixels in the vertical direction (y axis). These numbers are merely exemplary, and any ratio could be used as appropriate for a given application.

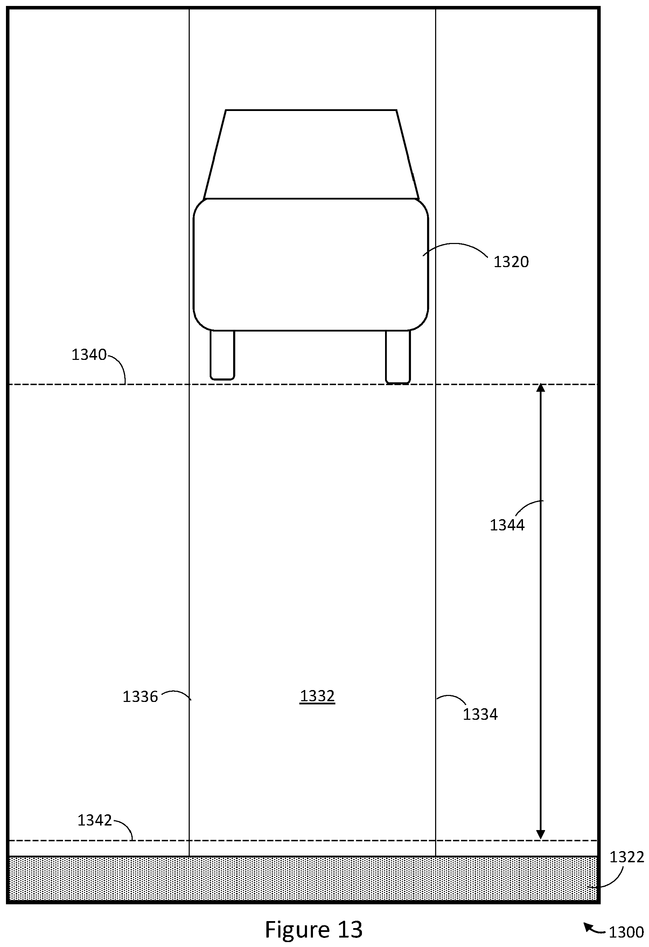

In act 1008, the at least one processor determines a transformed first vertical position by applying an image transformation matrix to the first vertical position determined in act 1004. In act 1010, the at least one processor determines a transformed second vertical position by applying the image transformation matrix to the second vertical position. The image transformation matrix is a matrix which, when applied to image data for a particular image capture device setup, transforms the image data to a bird's eye view of the image. That is, the image transformation matrix transforms the image data to a top-down view, where there is a fixed relationship between physical following distance and image distance (e.g., image distance can be converted to physical distance by applying a fixed ratio which relates image distance to physical distance). That is, in the transformed image, a pixel represents a set physical distance, regardless of the position of the pixel in the image. This is discussed in detail below with reference to Figure 13. How the image transformation matrix can be obtained is discussed later with reference to Figures 14, 15, and 16.

Figure 13 illustrates transformed image data 1300, based on the image 1100 discussed with reference to Figure 11. In particular, transformed image data 1300 represents a portion of image 1100 extending from a bottom of image 1100 to above vehicle 1120 as represented in image 1100. Transformed image data 1300 can be obtained by applying the image transformation matrix to image 1100 (or a portion thereof). Transformed image data 1300 is shown in Figure 13 as including representation 1332 of roadway 1132, as shown by representations 1334 and 1336 of boundaries 1134 and 1136, respectively. Transformed image data 1300 further includes representation 1320 of vehicle 1120, and representation 1322 of hood 1122 of the second vehicle. A transformed first vertical position 1340 is also shown in Figure 13, which represents a transformation of the first vertical position as determined in act 1008. A transformed second vertical position 1342 is also shown in Figure 13, which represents a transformation of the second vertical position as determined in act 1010.

The transformed image data (such as shown in Figure 13) does not need to have the same resolution or aspect ratio as image data prior to transformation. This can be seen by comparing Figures 11 and 13, where transformed image data 1300 is significantly taller than wide, compared to image 1100. Further, in some respects, the transformed image data may not be a completely faithful reproduction of how the scene would actually appear if viewed from the top view. For example, while representation 1320 may represent a shape and scale of vehicle 1120 as transformed, image data 1100 may not include data which shows what an actual top of vehicle 1120 looks like. In this regard, representation 1320 may be image data representing a rear of vehicle 1120, transformed to a shape and scale of a top view of vehicle 1120.

In some implementations, acts 1008 and 1010 of method 1000 can entail transforming a significant portion of the image, such as shown in Figure 13, and identifying the transformed first vertical position 1340 and the transformed second vertical position 1342 in the transformed image data. However, this is not strictly necessary, and instead the image transformation matrix can be applied directly to the first vertical position and the second vertical position to determine the transformed first vertical position and the transformed second vertical position. This approach can significantly reduce computational burden of method 1000.

Returning to method 1000 in Figure 10, at 1012, the at least one processor determines an image distance between the transformed first vertical position and the transformed second vertical position. This is shown by way of example in Figure 13 as image distance 1344. The image distance can be, for example, a quantity of pixels between the transformed first vertical position and the transformed second vertical position.

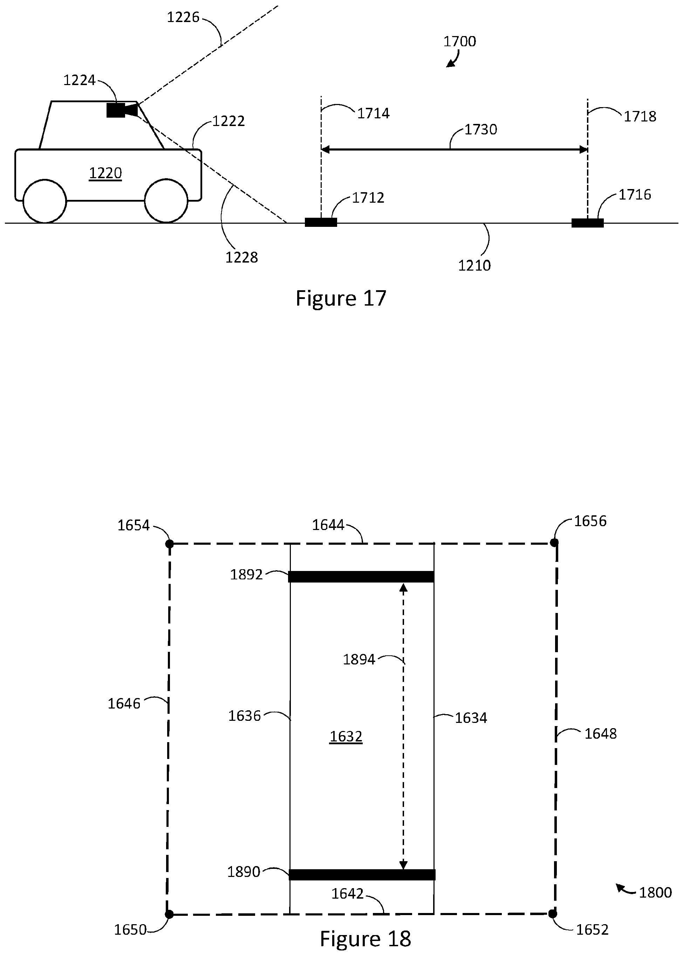

At 1014, the at least one processor determines following distance as a physical distance between the first vehicle and the second vehicle based on the image distance determined at 1012 and the static physical distance discussed with reference to Figures 11 and 12. In particular, a ratio of physical distance to image distance is applied to the image distance determined at 1012 (image distance 1344 in the example of Figure 13) to determine a physical distance represented by the determined image distance. How such a ratio of physical distance to image distance can be determined is discussed later with reference to Figures 17, 18, 19, and 20. The static physical distance discussed with reference to act 1006 is added to the determined physical distance to arrive at following distance between the first vehicle and the second vehicle.

At 1016, the determined following distance is output. In an exemplary implementation where method 1000 is used to determine following distance in act 506 of method 500, outputting the following distance can include preparing the following distance for a next act in the method 500 (e.g. by storing the determined following distance in at least one non-transitory processor-readable storage medium). In another exemplary implementation, outputting the following distance can include outputting the following distance to a driver of the second vehicle, such as via a display or audio output device. In yet another exemplary implementation, outputting the following distance can include providing the determined following distance to a database (e.g. at a device or server such as client device 104, cloud server 106, or local server 118 in Figures 1A and 1B). Such a database or server can use determined following distances logged over time, for example for analyzing driver behavior for safe or unsafe conduct.

Figure 14 is a flowchart diagram which illustrates an exemplary method 1400 for determining an image transformation matrix such as that utilized in method 1000 in Figure 10. Method 1400 as illustrated includes acts 1402, 1404, 1406, 1408, 1410, 1412, 1414, and 1416. One skilled in the art will appreciate that additional acts could be added, acts could be removed, or acts could be reordered as appropriate for a given application. Acts of method 1400 can be performed by appropriate components of the systems or devices discussed earlier, similar to as discussed with reference to method 500 in Figure 5, and not repeated for brevity. Importantly, a system or device which performs method 1400 is not necessarily the same hardware which determines following distance (as in method 1000 discussed earlier). In this way, calibration of an image capture device and use of image data captured by an image capture device can be performed by discrete systems or devices most suited to the task. However, in some implementations, a single device or system can perform all of calibration of an image capture device and use of image data captured by said image device.

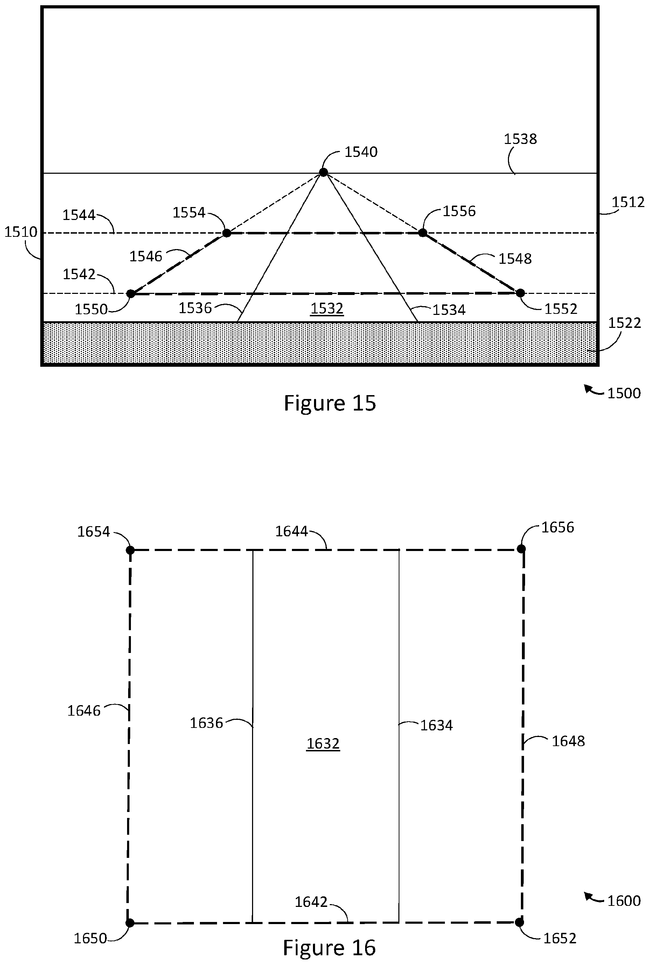

Method 1400 is discussed below in the context of a first example scenario illustrated in Figures 15 and 16. However, method 1400 is applicable to many different scenarios. Figure 15 illustrates an image 1500 having a left boundary 1510 and a right boundary 1512. Image 1500 includes a roadway 1532 shown by edges 1534 and 1536, towards a horizon 1538. A vehicle carries the image capture device which the perspective of image 1500 represents (i.e., the camera which captures image 1500). A hood 1522 of the vehicle is visible at the bottom of image 1500. Figure 15 also illustrates a number of lines and points which annotate image 1500, and are discussed below in the context of method 1400.

Returning to method 1400, at 1402 an image is accessed by a system or device performing method 1400. The image includes a representation of a lane of travel from a perspective of a vehicle. Image 1500 shown in Figure 15 is an exemplary image which can be accessed in this regard, where hood 1522 is part of the vehicle, roadway 1532 includes the lane of travel as shown by boundaries 1534 and 1536. While roadway 1532 in Figure 15 is shown as a single-lane road to reduce clutter, the present disclosure is fully applicable to multi-lane roadways, where the vehicle travels in one of multiple possible lanes. Further, while not shown in Figure 15 to reduce clutter, it is possible for other vehicles to be represented in the image (possibly traveling in the same lane of travel). In this regard, image data such as image 1100 in Figure 11 could also be accessed and used in the context method 1400. In such a case, the common lane of travel in image 1100 can be the lane of travel referred to in method 1400. In some implementations, accessing the image comprises capturing the image, by at least one image capture device positioned at the second vehicle. In other implementations, accessing the image comprises receiving the image by a device or system performing method 1400 (e.g., a server which performs method 1400 can receive the image as transmitted from an image capture device at a vehicle which captured the image). In yet other implementations, accessing the image comprises accessing the image as stored in at least one non-transitory processor-readable storage medium (e.g., the image is previously captured by an image capture device, and stored at a non-transitory processor-readable storage medium at a vehicle or at a server for later retrieval when performing method 1400).

At least one processor of the system or device performing method 1400 can optionally preprocess the accessed image as appropriate. For example, the image data can be cropped to a defined resolution, or image correction can be applied such as distortion to compensate for skewing in the image due to properties of the image capture device. As examples, radial distortion and/or tangential distortion of the image data can be compensated for. In some implementations, the accessed image data is already pre-processed to be of a desired resolution and/or to have distortion corrected, prior to access and utilization in method 1400.

At 1404, at least one processor of the system performing method 1400 determines a first boundary of the lane of travel. At 1406, the at least one processor determines a second boundary of the lane of travel. In the example of image 1500 of Figure 15, the at least one processor identifies boundaries 1534 and 1536 of roadway 1532, for example by applying a feature detection model to the image 1500. In an example, the at least one processor can detect lanes in the form of a segmentation mask, where pixels forming lane markings are labeled as lane marking pixels, while other pixels are labelled as background pixels.

Determining the first boundary and the second boundary can entail determining a mathematical representation for each boundary, for example in accordance with Equation (3) below.

$$y = mx + b \qquad\qquad (3)$$

Equation (3) is a mathematical representation of a straight line, where y is a vertical value, m is slope of the line, x is a horizontal value, and b is the y intercept (where the line crosses the vertical axis when x = 0). Determining the first boundary at 1404 can entail determining a first slope $m_1$ and a first y intercept $b_1$ for the first boundary. Likewise, determining the second boundary at 1406 can entail determining a second slope $m_2$ and a second y intercept $b_2$ for the second boundary. Equation (3) is merely exemplary, and alternative equations or mathematical representations for lines could be used instead.

In some scenarios, many lane markings for a plurality of lanes of travel may be visible in an image being analyzed. In such a case, where an origin of the image is at the top-left of the image, lines having negative slope can be considered as being left of the vehicle which carries the image capture device (vehicle having hood 1122 in image 1100), and lines having positive slope can be considered as being right of the vehicle which carries the image device, from the perspective of the image capture device. Further, from a midpoint of the image, the closest line having negative slope can be considered as a left boundary of a lane of travel of the vehicle carrying the image capture device (vehicle having hood 1122 in image 1100), and the closest line having positive slope can be considered as a right boundary of a lane of travel of the vehicle carrying the image capture device. This left boundary and right boundary can be the first boundary and the second boundary determined at 1404 and 1406.

At 1408, the at least one processor determines a vanishing point for the image as a point where the first boundary and the second boundary intersect each other. For example, the equation for the first boundary and the equation for the second boundary can be combined (e.g. one equation substituted into the other) to determine coordinates for the vanishing point. The coordinates for the vanishing point can be expressed as $x_{vp}$ and $y_{vp}$. In the example of Figure 15, the vanishing point is labelled as 1540.

At 1410, a region of interest in the image is accessed. This region of interest is shown in Figure 15 delineated by bottom edge 1542, top edge 1544, left edge 1546, and right edge 1548. As can be seen in Figure 15, the region of interest is trapezoidal. The region of interest is accentuated by bold dashed lines, but the edges are shown extending beyond the region of interest so that said edges can be more clearly understood. The top edge (1544 in Figure 15) and the bottom edge (1542 in Figure 15) are parallel to a horizontal axis of the image. The left edge (1546 in Figure 15) extends from a point (1550 in Figure 15) left of the left boundary 1536 towards the vanishing point (1540 in Figure 15). The right edge (1548 in Figure 15) extends from a point (1552 in Figure 15) right of the right boundary 1534 towards the vanishing point (1540 in Figure 15). For convenience, in some implementations the point 1550 can be positioned at the left boundary 1510 of image 1500, and the point 1552 can be positioned at the right boundary 1512 of image 1500. In such implementations, the left edge of the region of interest extends from the left boundary 1510 of the image 1500 towards the vanishing point 1540, and the right edge of the region of interest extends from the right boundary 1512 of the image towards the vanishing point 1540.

The region of interest can be accessed in different ways. In some implementations, the region of interest may be received at least partially as user input. In particular, a user of the system or device performing method 1400 may interact with a user input device to provide at least some attributes of the region of interest. For example, the user may input a position of the top edge (e.g. 1544), the bottom edge (e.g. 1542), a point on the left edge (e.g. 1550), and a point on the right edge (e.g. 1552). As another example, the user may input only the position of the top edge and the bottom edge, and the left edge and right edge can be inferred by the at least one processor (e.g. as edges extending from boundaries 1510 and 1512 of the image towards the vanishing point 1540). In other implementations, the region of interest can be autonomously determined or generated by the at least one processor, by defining the edges of the region of interest within reasonable limits. In particular, the bottom edge of the region of interest should be above a hood of the vehicle as represented in the image data (e.g. hood 1522 in Figure 15); the top edge should be below the horizon 1538 (and below vanishing point 1540), and preferably low enough in the image such that boundaries of the lane of travel are clearly visible. The left edge and the right edge of the region of interest can be determined by the at least one processor (e.g. as edges extending from boundaries 1510 and 1512 of the image towards the vanishing point 1540, or from randomly determined points 1550 and 1552).

Returning to method 1400, at 1412, the at least one processor determines a transformed region of interest where a left edge of the transformed region of interest is parallel to a right edge of the transformed region of interest. As can be seen in Figure 15, the region of interest is trapezoidal. Figure 16 illustrates a transformed region of interest determined in accordance with act 1412. In particular, Figure 16 illustrates a transformed region of interest 1600 having a top edge 1644 and a bottom edge 1642 parallel to each other; and a left edge 1646 and a right edge 1648 parallel to each other. As a result, transformed region of interest 1600 is rectangular (and possibly square). The four corners of transformed region of interest 1600 are bottom-left corner 1650 (which represents point 1550 of the pre-transformation region of interest), bottom-right corner 1652 (which represents point 1552 of the pre-transformation region of interest), top-left corner 1654 (which represents point 1554 of the pre-transformation region of interest), and top-right corner 1656 (which represents point 1556 of the pre-transformation region of interest). Figure 16 also shows representation 1632 of roadway 1532, and representations 1634 and 1636 of boundaries 1534 and 1536, respectively, which are also shown as parallel to each other due to the transformation of the region of interest.

To determine the transformed region of interest, coordinates of the four corners are determined by the at least one processor which will result in edges 1646 and 1648 being parallel. To achieve this, the width of top edge 1644 and the width of the bottom edge 1642 should be equal. Thus, setting one corner as an origin, e.g. by setting top-left corner 1654 to have coordinates of (0,0), the remaining corners can be defined relative thereto by an arbitrary size (e.g. 720, in this example). In particular, top-right corner 1656 can have coordinates of (719,0); bottom-left corner 1650 can have coordinates of (0,719), and bottom-right corner 1652 can have coordinates of (719,719). This results in a square transformed region of interest, but in some implementations the vertical size may be different from the horizontal size, which results in a rectangular transformed region of interest.

The at least one processor determines a transformation matrix H (which can also be referred to as a homography matrix), which when applied to points of the region of interest, results in the points of the transformed region of interest, as shown in Equation (4) below.

$$\begin{bmatrix} u_t \\ v_t \\ 1 \end{bmatrix} = H \begin{bmatrix} u \\ v \\ 1 \end{bmatrix} \qquad (4)$$

In Equation (4), u and v are coordinates in the input image, and $u_t$ and $v_t$ are corresponding coordinates in the transformed image. With reference to the example of Figures 15 and 16, for the top-left corner (points 1554 and 1654), (u, v) = (379, 480) and ($u_t$, $v_t$) = (0, 0); for the top-right corner (points 1556 and 1656), (u, v) = (821, 480) and ($u_t$, $v_t$) = (719, 0); for the bottom-left corner (points 1550 and 1650), (u, v) = (189, 600) and ($u_t$, $v_t$) = (0, 719); and for the bottom-right corner (points 1552 and 1652), (u, v) = (1074, 600) and ($u_t$, $v_t$) = (719, 719).

Based on the provided region of interest and transformed region of interest points, an image transformation matrix H can be determined, for example using a known function. The open computer vision library (OpenCv) includes such a function as "getPerspectiveTransform". For the exemplary points listed above, H can be calculated as:

$$H = \begin{bmatrix} -0.5406 & -0.85595 & 615.75 \\ 2.1171 * 10^{-16} & -3.9869 & 1913.7 \\ 1.5066 * 10^{-19} & -0.0027757 & 1 \end{bmatrix}$$

In addition to determining the image transformation matrix H, a ratio of image distance to physical distance for the vertical axis of the image (as transformed according to the image transformation matrix) can also be determined. This can be performed in multiple ways, some examples of which are discussed below with reference to Figures 17, 18, 19, and 20.

Figure 17 is a side view of an exemplary scenario 1700, in which a vehicle 1220 is positioned on a surface 1210, similar to as discussed above with reference to Figure 12. In scenario 1700, vehicle 1220 is stationary. A first marker 1712 is also positioned on surface 1210, and a projection 1714 is shown extending upwards from first marker 1712 (perpendicular to surface 1210). A second marker 1716 is also positioned on surface 1210, and a projection 1718 is shown extending upwards from second marker 1716 (perpendicular to surface 1210). An image capture device 1224 is positioned at vehicle 1220, and captures image data within a field of view shown by field of view lines 1226 and 1228. A hood 1222 of vehicle 1220 is partially captured within field of view lines 1226 and 1228. A physical distance 1730 between first marker 1712 (or projection 1714 from first marker 1712) and second marker 1716 (or projection 1718 from second marker 1716) is shown, and could be determined for example by manual measurement. This physical distance 1730 can then be correlated to an image distance in image data captured by image capture device 1224 (or more specifically to transformed image data). This is discussed below with reference to Figure 18.

Figure 18 illustrates a transformed region of interest 1800, similar to transformed region of interest 1600 as shown in Figure 16. Similar numerical labels are used in Figure 18 that are discussed earlier with reference to Figure 16; such discussion is not repeated for brevity. Figure 18 additionally shows representation 1890 of first marker 1712, and representation 1892 of second marker 1716 (as transformed versions of image data captured by image capture device 1224). Figure 18 further shows image distance 1894 between representation 1890 and representation 1892. The at least one processor can determine a ratio between physical distance 1730 in Figure 17 and image distance 1894 in Figure 18. Such a ratio is a ratio of image distance to physical distance for a vertical axis of the image as transformed in accordance with the image transformation matrix, which can be applied in the context of method 1000 to determine following distance. In the example of Figures 17 and 18, the physical distance 1730 is coaxial to the lane of travel of vehicle 1220, and the image distance 1894 is coaxial to the roadway 1632 as represented in the transformed region of interest.

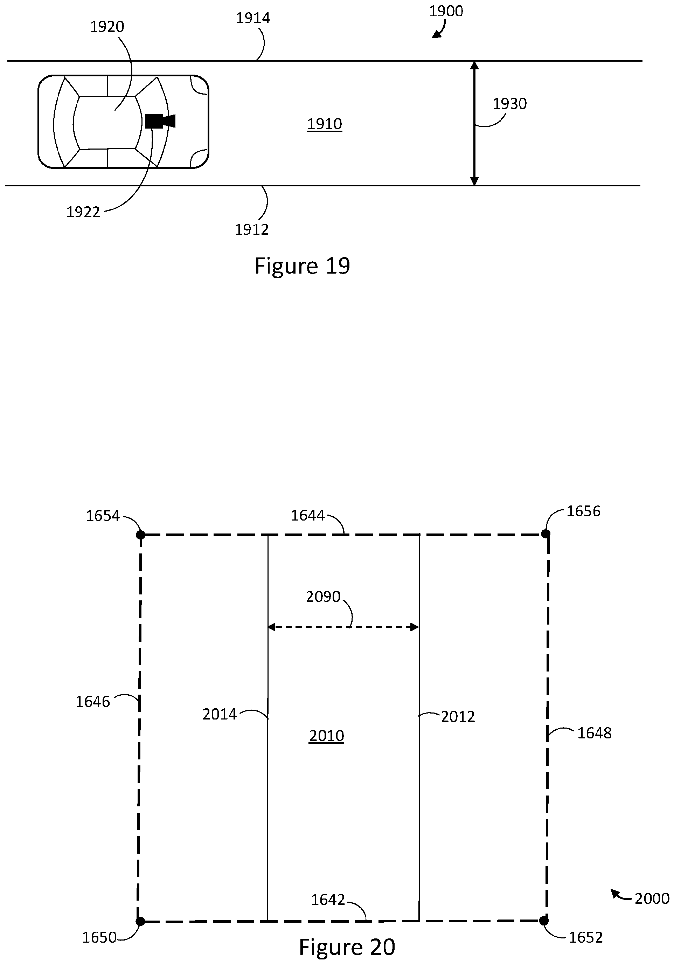

Figures 17 and 18 illustrate one exemplary procedure for determining a ratio between physical distance and image distance. However, this approach entails physical setup to calibrate (laying of markers 1712 and 1716, and positioning of vehicle 1220), and therefore increases labor to execute. Other implementations are possible, such as the example discussed below with reference to Figures 19 and 20.

In another implementation, the at least one processor can first determine a ratio of image distance to physical distance for a horizontal axis of an image (as transformed according to the image transformation matrix), based on a received measurement for a lane of travel and an image distance width of the lane of travel as represented in image data captured by an image capture device in a vehicle.

Figure 19 is a top view of a scenario 1900. In scenario 1900, a vehicle 1920 is positioned on (e.g. driving along) a roadway 1910, delineated by boundaries 1912 and 1914. Vehicle 1920 carries an image capture device 1922 which captures image data. A physical distance 1930 corresponding to a width of the roadway 1910 is also illustrated. Physical distance 1930 could be obtained, for example, by manual measurement, or by measurement from available image data such as satellite image data, or from a database of road features which includes lane size information for roadway 1910.

Figure 20 illustrates a transformed region of interest 2000, similar to transformed region of interest 1600 as shown in Figure 16. Similar numerical labels are used in Figure 20 that are discussed earlier with reference to Figure 16; such discussion is not repeated for brevity. Figure 20 illustrates a transformed region of interest in image data captured by image capture device 1922 while driving along roadway 1910. Figure 20 shows representation 2010 of roadway 1910, representation 2012 of boundary 1912, and representation 2014 of boundary 1914. Figure 20 additionally shows image distance 2090 between representations 2012 and 2014. The at least one processor can determine a ratio between physical distance 1930 in Figure 19 and image distance 2090 in Figure 20. Such a ratio is a ratio of image distance to physical distance for a horizontal axis of the image (as transformed according to the image transformation matrix) which can be applied in the context of method 1000 to determine following distance.

To determine following distance, a ratio of image distance to physical distance for a vertical axis of the image can be determined by the at least one processor, based on the ratio of image distance to physical distance for the horizontal axis of the image as discussed with reference to Figures 19 and 20, and based on the image transformation matrix used to transform the image data. An exemplary methodology to this is discussed in detail below with reference to Figure 21.

Figure 21 is a side view of an exemplary scenario 2100. In scenario 2100, a surface 2190 is shown, on which a vehicle can drive. An image capture device (camera) 2110 is also shown, with a field of view shown at least in part by field of view lines 2112 and 2114 (though the field of view can extend further than the field of view lines). Image capture device 2110 can be for example a camera mounted in a vehicle (which is why image capture device 2110 is shown elevated from surface 2190). Such a vehicle is not illustrated in Figure 21, to reduce clutter. A world coordinate system is illustrated by Y axis $Y_w$ and Z axis $Z_w$, and has an origin in front of the image capture device 2110 (and aligned with a virtual image capture device 2120 which is discussed in more detail later). The world coordinate system also includes an X axis $X_w$, which is not illustrated because it extends out of (normal to) the page. The world coordinate system can be used to specify positions in the real world.

Figure 21 also shows an image $I_p$ captured by image capture device 2110. The image $I_p$ is a projection (hence the subscript label p) of the real world as seen by image capture device 2110 onto a two-dimensional plane having axis $U_p$ (not shown because it extends into the page) and $V_p$ (shown in the example as extending downwards due to the convention where a top-left corner of an image is the origin, though other conventions could be used instead as appropriate).

For a particular image capture device (camera), a set of camera matrices can be used which converts real-world coordinates with respect to the camera to pixel coordinates for an image captured by the image capture device, in accordance with Equation (5) below.

$$\begin{bmatrix} u_p \\ v_p \\ 1 \end{bmatrix} = M[r_1\, r_2\, r_3\, t] \begin{bmatrix} x_w \\ y_w \\ z_w \\ 1 \end{bmatrix} \qquad\qquad (5)$$

Generally, when the image capture device captures image data, the image data is a two-dimensional projection of the three-dimensional world in the field of view of the camera. In this regard, $x_w$, $y_w$, and $z_w$ represent an x value, a y value, and a z value for a real-world coordinate in a world coordinate system (i.e. in the $X_w$ axis, $Y_w$ axis, and $Z_w$ axis discussed above). $u_p$ represents a horizontal value (in the $U_p$ axis), and $v_p$ represents a vertical value (in the $V_p$ axis), respectively, in a two-dimensional image (e.g. image $I_p$) captured by the camera, which corresponds to projected position of the real-world coordinate.

The matrix $[r_1\, r_2\, r_3\, t]$ represents an Extrinsic Matrix for the camera, which converts world coordinates for the world coordinate system to coordinates in a camera coordinate system, and depends on position and orientation of the camera. The matrix $[r_1\, r_2\, r_3\, t]$ is a 4 by 4 matrix where $r_1$, $r_2$, and $r_3$ are rotational vectors and $t$ is a translation vector. Vectors $r_1$, $r_2$, and $r_3$ have the convenient property where the length of each vector is 1, which will be utilized later. In some implementations the extrinsic matrix is not strictly necessary (or is an identity matrix), in particular if the origin of the world coordinate system is set as the camera position in the world and corresponding axes are aligned (such that the world coordinate system and the camera coordinate system are equivalent). This is not the case in the example of Figure 21, however. Further, the matrix $M$ represents an Intrinsic Matrix for a camera which converts points from the camera coordinate system to a pixel coordinate system, and is dependent on properties of the camera such as focal length, pixel dimensions, resolution, etc. The Equation (5) combines the Extrinsic Matrix for the camera with the Intrinsic Matrix for the camera, (by multiplying the Intrinsic Matrix and the Extrinsic Matrix together, in the example). Intrinsic and Extrinsic Camera matrices are known in the art, as discussed for example at the following article:

https://towardsdatascience.com/what-are-intrinsic-and-extrinsic-camera-parameters-in-computer-vision-7071b72fb8ec

In the example of Figure 21, since the surface 2190 is planar, all points of interest lie in the $z_w = 0$ plane. Consequently, Equation (5) can be reduced to Equation (6) below.

$$\begin{bmatrix} u_p \\ v_p \\ 1 \end{bmatrix} = M[r_1\, r_2\, t] \begin{bmatrix} x_w \\ y_w \\ 1 \end{bmatrix} \qquad\qquad (6)$$

To convert a real-world coordinate to a coordinate in a two-dimensional image transformed in accordance with image transformation matrix $H$ discussed earlier, we can combine Equations (4) and (6), such as by using the matrix containing $u_p$ and $v_p$ from Equation (21) as the matrix containing input coordinates $u$ and $v$ in Equation (4), to arrive at Equation (7) below.

$$\begin{bmatrix} u_t \\ v_t \\ 1 \end{bmatrix} = HM[r_1\, r_2\, t] \begin{bmatrix} x_w \\ y_w \\ 1 \end{bmatrix} \qquad\qquad (7)$$

As discussed earlier, the image as transformed by image transformation matrix $H$ represents a top view (bird's eye view) of the scene. Figure 21 illustrates a virtual image capture device 2120, which corresponds to a position and orientation of an image capture device which could have captured the transformed image. Virtual image capture device 2120 virtually would capture a field of view shown by field of view lines 2122 and 2124, to capture an image $I_t$ having a horizontal axis $U_t$ (not shown because it extends into the page) and a vertical axis $V_t$. Image $I_t$ represents an transformed version of image $I_p$; that is, image $I_p$ multiplied by the image transformation matrix $H$ is image $I_t$. Notably, the world coordinate system (axes $X_w$, $Y_w$, and $Z_w$) is the same for both image capture device 2110 and virtual image capture device 2120. Further, axis $Z_w$ is aligned with a center of virtual image capture device 2120; that is, axis $Z_w$ extends through virtual image capture device 2120, to a center of image $I_t$.

A vertical image distance for image $I_t$ (e.g. number of pixels along axis $V_t$) of a point from the center of the two-dimensional image, when the real-world coordinate which the point is a projection of is 1 meter (or some other appropriate set distance) offset from a center axis of the virtual image capture device 2120 (i.e. 1 meter offset from the $Z_w$ axis along the $Y_w$ axis) can be represented as $r_y$. Further, from the property of similar triangles (the angle to a real-world coordinate from a camera is equal to the angle from the camera to a two-dimensional projection of the coordinate as captured by the camera), a position of a projected coordinate in image $I_t$ is proportional to the $y_w$ position of the coordinate. Consequently, for a real-world coordinate D a distance d along the $Y_w$ axis, the vertical image distance of a projection of coordinate D from a center of the image $I_t$ is $r_y*d$. That is, $r_y$ represents a ratio of vertical image distance in the transformed image $I_t$ to physical distance along the $Y_w$ axis (or pixels in the image per meter in the real world).

Further, the relationship between image distance and position of the real-world coordinate is not necessarily the same in the horizontal direction and the vertical direction of the transformed image. To this end, an image distance in the horizontal direction ($U_t$ axis) of a point from the center of the two-dimensional image $I_t$, when the coordinate which the point is a projection of is offset horizontally from the $Z_w$ axis (i.e. along the $X_w$ axis) by 1 meter (or some other appropriate set distance) can be represented as $r_x$. The above relationships can be expressed as in Equations (8) and (9) below.

$$u_t = r_x x_w + C_x \qquad (8)$$

$$v_t = r_y y_w + C_y \qquad (9)$$

In the scenario 2100 the virtual image capture device 2120 is positioned with an optical center aligned with axis $Z_w$. As a result, coordinates in virtual images which could be captured by virtual image capture device 2120 (or images transformed in accordance with matrix H) are offset from a center of said image (due to the convention that an origin of image data is at a top-left corner of the image data, though other conventions could be used as appropriate). Consequently, Equation (8) includes an offset for the optical center $C_x$ (in the $U_t$-axis) of virtual image capture device 2120, and Equation (9) includes an offset for the optical center $C_y$ (in the $V_t$-axis) of virtual image capture device 2120. Thus, Equation (8) expresses that a horizontal coordinate in the image $I_t$ can be determined based on the horizontal image distance to physical distance ratio $r_x$ multiplied by the real-world horizontal distance (in the $X_w$ direction), accounting for horizontal offset from the origin of the image data (top left corner of the image $I_t$). Similarly, Equation (9) expresses that a vertical coordinate in the image $I_t$ can be determined based on the vertical image distance to physical distance ratio $r_y$ multiplied by the real-world distance in the $Y_w$ direction, accounting for offset from the origin of the image data (top left corner of the image $I_t$).

Putting Equations (8) and (9) in matrix form results in Equation (10) below:

$$\begin{bmatrix} u_t \\ v_t \\ 1 \end{bmatrix} = \begin{bmatrix} r_x & 0 & C_x \\ 0 & r_y & C_y \\ 0 & 0 & 1 \end{bmatrix} \begin{bmatrix} x_w \\ y_w \\ 1 \end{bmatrix} \qquad (10)$$

Comparing Equations (7) and (10) results in Equation (11) below.

$$\begin{bmatrix} u_t \\ v_t \\ 1 \end{bmatrix} = HM[r_1\, r_2\, t] \begin{bmatrix} x_w \\ y_w \\ 1 \end{bmatrix} = \begin{bmatrix} r_x & 0 & C_x \\ 0 & r_y & C_y \\ 0 & 0 & 1 \end{bmatrix} \begin{bmatrix} x_w \\ y_w \\ 1 \end{bmatrix} \qquad (11)$$

Equation (11) can be simplified to Equation (12) below.

$$HM[r_1\, r_2\, t] = \begin{bmatrix} r_x & 0 & C_x \\ 0 & r_y & C_y \\ 0 & 0 & 1 \end{bmatrix} \qquad (12)$$

As mentioned earlier, vectors $r_1$ and $r_2$ each have a length of 1. Consequently, solving Equation (12) using known linear algebra techniques (row and column operations) results in Equation (13) below.

$$r_y = r_x \frac{\|h_1\|}{\|h_2\|} \qquad (13)$$

In Equation (13), $h_1$ is the first column of $(HM)^{-1}$, and $h_2$ is the second column of $(HM)^{-1}$. Equation (13) expresses

a relationship between a ratio of image distance to physical distance for a vertical axis of the image ($r_y$) to a ratio of image distance to physical distance for a horizontal axis of the image ($r_x$), for an image captured by image capture device 2110. Using this relationship, a ratio of image distance to physical distance for a horizontal axis of the image, such as determined as discussed with reference to Figures 19 and 20, can be converted to a ratio of image distance to physical distance for a vertical axis of the image. This in turn can be used to determine following distance as discussed with reference to at least Figures 10-43.

The procedures described above and with reference to Figures 17, 18, 19, 20 and 21 do not need to be performed in the context of method 1000 in Figure 10, but rather can be performed prior to said method, as part of an initialization or calibration of the image capture device in the second vehicle.

In the context of many of the methods discussed herein (such as method 500 in Figure 5 and method 1000 in Figure 10), it is desirable to determine whether a vehicle represented in image data is travelling in a same lane of travel as a vehicle carries an image capture device. Figures 22 and 23 discussed below illustrate an exemplary technique in this regard. Figure 22 illustrates an image 2200 similar to image 1100 described with reference to Figure 11. The description of Figure 11 is generally applicable to Figure 22, and description of similarly labelled elements is not repeated for brevity. Image 2200 shows a vehicle 2220 (similar to vehicle 1120, the first vehicle in method 1000) driving along a roadway 1132 shown by edges 1134 and 1136, towards a horizon 1138. A vehicle (the second vehicle in method 1000) is driving behind vehicle 2220, and carries the image capture device which the perspective of image 2200 represents (i.e., the camera which captures image 2200). A hood 2222 of the second vehicle is visible at the bottom of image 2200.

At least one processor of any of the systems or devices discussed herein can identify vehicle 2220, such as by executing an object detection model. Vehicle 2220 is shown as being identified with a bounding box 2240 in the example of Figure 22. To determine whether vehicle 2220 is within a same lane of travel as the vehicle carrying the image capture device which captures image 2200 (the vehicle having hood 2222), points 2244 and 2246 can be identified for vehicle 2220. In the illustrated example, point 2244 represents a distance which is one-third of a width of bounding box 2240 from a right edge of bounding box 2240. Similarly, point 2246 represents a distance which is one-third of a width of bounding box 2240 from a left edge of bounding box 2240. The exact positions of points 2244 and 2246 can be selected as appropriate for a given application.

Further, at least one processor of any of the systems or devices discussed herein can identify boundaries 1134 and 1136 using any of the techniques discussed earlier (for example as discussed with reference to acts 1404 and 1406 in Figure 14), and not repeated for brevity.

In the illustrated implementation, vehicle 2220 can be determined as travelling in the same lane as the second vehicle having hood 2222 if both points 2244 and 2246 lie within the boundaries of the lane of travel of the second vehicle (the lane bounded by boundaries 1134 and 1136 in the example of Figure 22). Since this is true in Figure 22, Figure 22 shows an example where vehicle 2220 is positioned in front of, and in the same lane as, the vehicle having hood 2222.

Figure 23 illustrates an image 2300 similar to image 2200 described above. The description of Figure 22 is generally applicable to Figure 23, and description of similarly labelled elements is not repeated for brevity. One difference between Figure 22 and Figure 23 is that in Figure 23, vehicle 2220 is positioned further to the left, such that point 2246 is positioned left of boundary 1136. As a result, vehicle 2220 in Figure 23 can be considered as not being in the same lane of travel as the vehicle having hood 2222.

In some implementations, vehicle 2220 may be determined as travelling in the same lane as the second vehicle having hood 2222 if EITHER of points 2244 and 2246 lie within the boundaries of the lane of travel of the second vehicle (the lane bounded by boundaries 1134 and 1136 in the example of Figure 22). Such an implementation favors detection of vehicles which can still pose a tailgating risk, even as they are transitioning into or out of the lane of travel, as an example. In such an implementation, vehicle 2220 in Figure 23 would be considered as being in the same lane of travel as the vehicle having hood 2222.

While the present invention has been described with respect to the non-limiting embodiments, it is to be understood that the invention is not limited to the disclosed embodiments. Persons skilled in the art understand that the disclosed invention is intended to cover various modifications and equivalent arrangements included within the scope of the appended claims. Thus, the present invention should not be limited by any of the described embodiments.

Throughout this specification and the appended claims, infinitive verb forms are often used, such as "to operate" or "to couple". Unless context dictates otherwise, such infinitive verb forms are used in an open and inclusive manner, such as "to at least operate" or "to at least couple".

The Drawings are not necessarily to scale and may be illustrated by phantom lines, diagrammatic representations, and fragmentary views. In certain instances, details that are not necessary for an understanding of the exemplary embodiments or that render other details difficult to perceive may have been omitted.

The specification includes various implementations in the form of block diagrams, schematics, and flowcharts. A person of skill in the art will appreciate that any function or operation within such block diagrams, schematics, and flowcharts can be implemented by a wide range of hardware, software, firmware, or combination thereof. As non-limiting examples, the various embodiments herein can be implemented in one or more of: application-specific integrated circuits (ASICs), standard integrated circuits (ICs), programmable logic devices (PLDs), field-programmable gate arrays (FPGAs), computer programs executed by any number of computers or processors, programs executed by one or more control units or processor units, firmware, or any combination thereof.

The disclosure includes descriptions of several processors. Said processors can be implemented as any hardware capable of processing data, such as application-specific integrated circuits (ASICs), standard integrated circuits (ICs), programmable logic devices (PLDs), field-programmable gate arrays (FPGAs), logic circuits, or any other appropriate hardware. The disclosure also includes descriptions of several non-transitory processor-readable storage mediums. Said non-transitory processor-readable storage mediums can be implemented as any hardware capable of storing data, such as magnetic drives, flash drives, RAM, or any other appropriate data storage hardware. Further, mention of data or information being stored at a device generally refers to the data information being stored at a non-transitory processor-readable storage medium of said device.

**Claims**

1.  A method for determining a following distance between a first vehicle and a second vehicle, the method comprising:

    accessing an image including a representation of the first vehicle from a perspective of the second vehicle behind the first vehicle, the image further representing a common lane of travel of the first vehicle and the second vehicle;
    determining, by at least one processor, a first vertical position in the image representing a bottom of the first vehicle;
    accessing, by the at least one processor, a second vertical position in the image representing a static physical distance from the second vehicle;
    determining a transformed first vertical position by applying, by the at least one processor, an image transformation matrix to the first vertical position;
    determining a transformed second vertical position by applying, by the at least one processor, the image transformation matrix to the second vertical position;
    determining an image distance between the transformed first vertical position and the transformed second vertical position;
    determining the following distance as a physical distance between the first vehicle and the second vehicle based on the determined image distance and the static physical distance; and
    outputting the determined following distance.

2.  The method of claim 1, wherein the first vertical position represents a bottom boundary of a bounding box which encompasses the first vehicle and the second vertical position represents a distal end of a hood of the second vehicle as represented in the image.

3.  The method of any one of claim 1 or claim 2, wherein the image transformation matrix represents a transformation of the image to a transformed image having a fixed relationship between pixel size in the transformed image and physical distance represented by the transformed image.

4.  The method of any one of claims 1 to 3, further comprising:

    determining a first boundary of the common lane of travel;
    determining a second boundary of the common lane of travel;
    determining a vanishing point for the image as a point where the first boundary and the second boundary intersect;
    accessing a region of interest in the image, where a bottom edge and a top edge of the region of interest are parallel to a horizontal axis of the image, a left edge of the region of interest extends from first point left of the common lane of travel towards the vanishing point, and a right edge of the region of interest extends from a second point right of the common lane of travel towards the vanishing point;
    determining a transformed region of interest where a left edge of the transformed region of interest is parallel to a right edge of the transformed region of interest; and
    determining the image transformation matrix as a matrix which when applied to the region of interest, transforms the region of interest to the determined transformed region of interest.

5.  The method of claim 4, wherein:

the first point is at a left boundary of the image;
the second point is at a right boundary of the image; the bottom edge of the region of interest is positioned above a hood of the second vehicle as represented in the image; and
the top edge of the region of interest is positioned below the vanishing point.

6. The method of any one of claims 4 or 5, wherein determining the transformed region of interest comprises determining four corner points of a rectangle corresponding to the transformed region of interest.

7. The method of any one of claims 4 to 6, further comprising:
determining a ratio of image distance to physical distance for a vertical axis of the image as transformed according to the image transformation matrix, based on a received measurement for a physical distance coaxial to the common lane and an image distance coaxial to the common lane as represented in the transformed region of interest.

8. The method of any one of claims 4 to 6, further comprising:
determining a ratio of image distance to physical distance for a horizontal axis of the image as transformed according to the image transformation matrix, based on a received measurement for a physical width of the common lane and an image distance width of the common lane as represented in the transformed region of interest.

9. The method of claim 8, further comprising:
determining a ratio of image distance to physical distance for a vertical axis of the image as transformed according to the image transformation matrix, based on the ratio of image distance to physical distance for the horizontal axis of the image and based on the image transformation matrix.

10. The method of any one of claims 1 to 9, further comprising:

determining, by the at least one processor, whether the following distance is within a tailgating distance criteria;
identifying, by the at least one processor, that the second vehicle is not tailgating the first vehicle if the following distance is outside of the tailgating distance criteria; and
identifying, by the at least one processor, that the second vehicle is tailgating the first vehicle if tailgating criteria are met, wherein the tailgating criteria includes the following distance being within the tailgating distance criteria.

11. The method of claim 10, further comprising, in response to an identification that the second vehicle is tailgating the first vehicle, outputting a tailgating indication.

12. A system for determining a following distance between a first vehicle and a second vehicle, the system comprising:

at least one processor; and
at least one non-transitory processor-readable storage medium communicatively coupled to the at least one processor and storing processor-executable instructions which when executed by the at least one processor cause the system to:

access an image including a representation of the first vehicle from a perspective of the second vehicle behind the first vehicle, the image further representing a common lane of travel of the first vehicle and the second vehicle;
determine, by the at least one processor, a first vertical position in the image representing a bottom of the first vehicle;
access, by the at least one processor, a second vertical position in the image representing a static physical distance from the second vehicle;
determine a transformed first vertical position by applying, by the at least one processor, an image transformation matrix to the first vertical position;
determine a transformed second vertical position by applying, by the at least one processor, the image transformation matrix to the second vertical position;
determine an image distance between the transformed first vertical position and the transformed second vertical position;
determine the following distance as a physical distance between the first vehicle and the second vehicle based on the determined image distance and the static physical distance; and
output the determined following distance.

13. The system of claim 12, wherein the processor-executable instructions further cause the system to perform the method of any one of claims 2 to 11.

14. A computer program comprising instructions which, when the program is executed by a computer, cause the computer to carry out the method of any one of claims 1 to 11.

15. A computer-readable storage medium comprising instructions which, when executed by a computer, cause the computer to carry out the method of any one of claims 1 to 11.

FIGURE 1A

FIGURE 1B

216

202

108A

| | | | |
|---|---|---|---|
| 218 | 214 | 210 | 208 |
| | 212 | 206 | 204 |

FIGURE 2A

216

108B

202

220

222

| | | |
|---|---|---|
| 218 | 210 | 208 |
| | 212 | 206 |

204

FIGURE 2B

300

316

312

314

322

324

Figure 3

```
┌──────────────────────────────────────────────────────────────────────────┐
│                          Access image data.                                │
└──────────────────────────────────────────────────────────────────────────┘
402
                                      │
                                      ▼
┌──────────────────────────────────────────────────────────────────────────┐
│                Identify vehicles represented in the image data.            │
└──────────────────────────────────────────────────────────────────────────┘
404
                                      │
                                      ▼
┌──────────────────────────────────────────────────────────────────────────┐
│   Determine following distance between a first vehicle and a second        │
│                      vehicle based on the image data.                      │
406                                                                          │
│   ┌──────────────────────────────────────────────────────────────────┐    │
│   │ Identify a following situation where the second vehicle is driving │   │
│   │                      behind the first vehicle.                     │   │
│   420                                                                   │   │
│   │   ┌──────────────────────────────────────────────────────────┐    │   │
│   │   │    Identify a lane of travel of the first and second       │   │   │
│   │   │                      vehicle.                              │   │   │
│   │   430                                                          │   │   │
│   │   └──────────────────────────────────────────────────────────┘    │   │
│   └──────────────────────────────────────────────────────────────────┘    │
│                                      │                                      │
│                                      ▼                                      │
│   ┌──────────────────────────────────────────────────────────────────┐    │
│   │  Determine distance between the first vehicle and the second       │   │
│   │               vehicle based on the image data.                     │   │
│   422                                                                   │   │
│   └──────────────────────────────────────────────────────────────────┘    │
└──────────────────────────────────────────────────────────────────────────┘
                                      │
                                      ▼
┌──────────────────────────────────────────────────────────────────────────┐
│         Identify whether the second vehicle is tailgating the first        │
│                                vehicle.                                     │
└──────────────────────────────────────────────────────────────────────────┘
408
                                      │
                                      ▼
┌──────────────────────────────────────────────────────────────────────────┐
│   Output an indication when the second vehicle is tailgating the first     │
│                                vehicle.                                     │
└──────────────────────────────────────────────────────────────────────────┘
410
```

400

Figure 4

Access image data including at least one image, each image in the image representing a perspective from a second vehicle.

502

Is a first vehicle represented in an image of the image data?

504

NO

YES

506

Apply a following distance determination model to determine a distance between the first vehicle and the second vehicle.

Are tailgating criteria met?

NO

Is the determined distance within a tailgating distance criteria?

512

510

YES

NO

Is the first vehicle in front of the second vehicle?

514

YES

Identify that the second vehicle is NOT tailgating the first vehicle.

520

Identify that the second vehicle is tailgating the first vehicle.

522

500

Output an indication of tailgating.

524

Figure 5

Figure 6

Figure 7A

Figure 7B

700B

Figure 7C

700C

Figure 8A

808

870          820                                                  872

806

802          804

800

Figure 8B

808

860                                              820          862

806          804

802

810

Alert: Tailgating
Please increase following distance
Following distance = 15 m

↖900

Figure 9

1000

1002 — Access an image including a representation of a first vehicle from a perspective of a second vehicle behind the first vehicle.

1004 — Determine a first vertical position in the image representing a bottom of the first vehicle.

1006 — Access a second vertical position in the image representing a static physical distance from the second vehicle.

1008 — Determine a transformed first vertical position by applying an image transformation matrix to the first vertical position.

1010 — Determine a transformed second vertical position by applying the image transformation matrix to the second vertical position.

1012 — Determine an image distance between the transformed first vertical position and the transformed second vertical position.

1014 — Determine following distance as a physical distance between the first vehicle and the second vehicle based on the determined image distance and the static physical distance.

1016 — Output the determined following distance.

Figure 10

Figure 11

Figure 12

Figure 13

1400

1402 — Access an image including a representation of a lane of travel from a perspective of vehicle.

1404 — Determine a first boundary of a lane of travel.

1406 — Determine a second boundary of a lane of travel.

1408 — Determine a vanishing point for the image as a point where the first boundary and the second boundary intersect.

1410 — Access a region of interest in the image, where a bottom edge and a top edge of the region of interest are parallel to a horizontal axis of the image, a left edge of the region of interest extends from a first point left of the lane of travel towards the vanishing point, and a right edge of the region of interest extends from a second point right of the lane of travel towards the vanishing point.

1412 — Determine a transformed region of interest where a left edge of the transformed region of interest is parallel to a right edge of the transformed region of interest.

1414 — Determine the image transformation matrix as a matrix which when applied to the region of interest, transforms the region of interest to the determined transformed region of interest.

1416 — Output the determined image transformation matrix.

Figure 14

Figure 15

Figure 16

Figure 17

Figure 18

Figure 19

Figure 20

Figure 21

Figure 22

Figure 23

EP 4 439 488 A1

Europäisches
Patentamt
European
Patent Office
Office européen
des brevets

# EUROPEAN SEARCH REPORT

**Application Number**

EP 24 16 5655

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/365696 A1 (HE YUAN [CN] ET AL) 25 November 2021 (2021-11-25) * the whole document * | 1-15 | INV. G06V20/56 G06V10/774 G06V10/82 |
| X | CN 110 745 140 B (UNIV TSINGHUA) 1 January 2021 (2021-01-01) * the whole document * | 1-15 | |
| A | WO 2021/253245 A1 (HUAWEI TECH CO LTD [CN]) 23 December 2021 (2021-12-23) * the whole document * | 1-15 | |
| A | KR 2022 0119396 A (QUALCOMM INC [US]) 29 August 2022 (2022-08-29) * the whole document * | 1-15 | |

**TECHNICAL FIELDS SEARCHED (IPC)**

G06V

The present search report has been drawn up for all claims

| Place of search | Date of completion of the search | Examiner |
|---|---|---|
| The Hague | 19 August 2024 | Valencia, Erika |

## ANNEX TO THE EUROPEAN SEARCH REPORT
## ON EUROPEAN PATENT APPLICATION NO.

EP 24 16 5655

This annex lists the patent family members relating to the patent documents cited in the above-mentioned European search report.
The members are as contained in the European Patent Office EDP file on
The European Patent Office is in no way liable for these particulars which are merely given for the purpose of information.

19-08-2024

| Patent document cited in search report | | Publication date | Patent family member(s) | | Publication date |
|---|---|---|---|---|---|
| US 2021365696 | A1 | 25-11-2021 | JP 2022520544 | A | 31-03-2022 |
| | | | KR 20210115026 | A | 24-09-2021 |
| | | | SG 11202108455P | A | 29-09-2021 |
| | | | US 2021365696 | A1 | 25-11-2021 |
| | | | WO 2020172842 | A1 | 03-09-2020 |
| CN 110745140 | B | 01-01-2021 | NONE | | |
| WO 2021253245 | A1 | 23-12-2021 | CN 112753038 | A | 04-05-2021 |
| | | | EP 4160346 | A1 | 05-04-2023 |
| | | | US 2023110730 | A1 | 13-04-2023 |
| | | | WO 2021253245 | A1 | 23-12-2021 |
| KR 20220119396 | A | 29-08-2022 | BR 112022012980 | A2 | 13-09-2022 |
| | | | CN 115244421 | A | 25-10-2022 |
| | | | EP 4088134 | A1 | 16-11-2022 |
| | | | JP 2023529766 | A | 12-07-2023 |
| | | | KR 20220119396 | A | 29-08-2022 |
| | | | TW 202244529 | A | 16-11-2022 |
| | | | US 2021209785 | A1 | 08-07-2021 |
| | | | WO 2021142451 | A1 | 15-07-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63279737
- US 17532209 B
- US 17979119 B
- US 63413035 B
- US 63430514 B
- US 63445753 B
- US 18111951 B